# EUROPÄISCHE PATENTSCHRIFT

(11) **EP 4 094 408 B1**
(45) Veröffentlichungstag und Bekanntmachung des Hinweises auf die Patenterteilung: **27.05.2026**
(21) Anmeldenummer: 21700922.4
(22) Anmeldetag: 18.01.2021
(51) Int. Cl.: H04L 12/40

(54) **SENDE-/EMPFANGSEINRICHTUNG UND KOMMUNIKATIONSSTEUEREINRICHTUNG FÜR EINE TEILNEHMERSTATION EINES SERIELLEN BUSSYSTEMS UND VERFAHREN ZUR KOMMUNIKATION IN EINEM SERIELLEN BUSSYSTEM**
TRANSMITTING/RECEIVING DEVICE AND COMMUNICATION CONTROL DEVICE FOR A SUBSCRIBER STATION OF A SERIAL BUS SYSTEM, AND METHOD FOR COMMUNICATION IN A SERIAL BUS SYSTEM
DISPOSITIF ÉMETTEUR/RÉCEPTEUR ET DISPOSITIF DE COMMANDE DE COMMUNICATION POUR UNE STATION ABONNÉE D'UN SYSTÈME DE BUS SÉRIE ET PROCÉDÉ DE COMMUNICATION DANS UN SYSTÈME DE BUS SÉRIE

(30) Priorität: 23.01.2020 DE 102020200803
(43) Veröffentlichungstag der Anmeldung: 30.11.2022
(73) Patentinhaber: Robert Bosch GmbH, 70442 Stuttgart (DE)
(72) Erfinder: HARTWICH, Florian, 72762 Reutlingen (DE); WALKER, Steffen, 72770 Reutlingen (DE); MUTTER, Arthur, 73765 Neuhausen (DE)
(86) Internationale Anmeldenummer: PCT/EP2021/050941
(87) Internationale Veröffentlichungsnummer: WO 2021/148350

(56) Entgegenhaltungen:
- DE-A1- 102018 203 707
- US-A1- 2017 168 966
- ANONYMOUS: "General-purpose input/output - Wikipedia - Version of 17 April 2019", 17 April 2019 (2019-04-17), XP055722562, Retrieved from the Internet <URL:https://en.wikipedia.org/w/index.php?title=General-purpose_input/output&oldid=892890128> [retrieved on 20200814]

## Beschreibung

### Technisches Gebiet

Die vorliegende Erfindung betrifft eine Sende-/Empfangseinrichtung und eine Kommunikationssteuereinrichtung für eine Teilnehmerstation eines seriellen Bussystems und ein Verfahren zur Kommunikation in einem seriellen Bussystem, das mit hoher Datenrate und großer Fehlerrobustheit arbeitet.

### Stand der Technik

Für die Kommunikation zwischen Sensoren und Steuergeräten, beispielsweise in Fahrzeugen, wird häufig ein Bussystem eingesetzt, in welchem Daten als Nachrichten im Standard ISO11898-1:2015 als CAN Protokoll-Spezifikation mit CAN FD übertragen werden. Die Nachrichten werden zwischen den Busteilnehmern des Bussystems, wie Sensor, Steuergerät, Geber, usw., als analoge Signale übertragen.

Jeder Busteilnehmer des Bussystems ist mit einer Sende-/Empfangseinrichtung an den Bus angeschlossen. In der Sende-/Empfangseinrichtung ist mindestens ein Empfangskomparator vorgesehen, der die analogen Signale von dem Bus empfängt und in ein digitales Signal umsetzt. Der Inhalt des digitalen Signals kann von einer Kommunikationssteuereinrichtung mit Hilfe ihres Protokollkontrollers interpretiert werden. Zudem kann die Kommunikationssteuereinrichtung ein Signal für die Übertragung auf dem Bus erstellen und mit der Sende-/Empfangseinrichtung auf den Bus senden. Auf diese Weise sind zwischen den Busteilnehmern Informationen austauschbar.

Um Daten mit höherer Bitrate über den Bus übertragen zu können als bei CAN, wurde im CAN FD Nachrichten-Format sowie im CAN XL Nachrichten-Format eine Option zur Umschaltung auf eine höhere Bitrate innerhalb einer Nachricht geschaffen. Bei solchen Techniken wird die maximal mögliche Datenrate durch Einsatz einer höheren Taktung im Bereich der Datenfelder im Vergleich zu CAN gesteigert. Dabei wird bei CAN FD-Rahmen oder CAN FD-Nachrichten die maximal mögliche Datenrate über einen Wert von 1 MBit/s hinaus gesteigert. Zudem ist die Nutzdatenlänge von 8 auf bis zu 64 Bytes erweitert. Ähnliches gilt für CAN XL, bei welchem die Schnelligkeit der Datenübertragung in den Bereich von zum Beispiel 10 Base-T1S Ethernet gesteigert sein soll und die bisher mit CAN FD erreichte Nutzdatenlänge von bis zu 64 Bytes größer sein soll. Dadurch kann die Robustheit des CAN oder CAN FD basierten Kommunikationsnetzwerks vorteilhaft beibehalten werden.

Für die Übertragung mit der höheren Bitrate ist die bisherige Betriebsart der Sende-/Empfangseinrichtung von einer Betriebsart für die Übertragung mit der niedrigeren Bitrate (Betriebsart Z_SL) in eine andere Betriebsart umzuschalten. Dabei ist zu berücksichtigen, dass bei der Übertragung mit der höheren Bitrate nur eine der Teilnehmerstationen des Bussystems Sender der Nachricht ist, wohingegen alle anderen Teilnehmerstationen nur Empfänger der Nachricht sind. Daher muss bei der Signalisierung der Betriebsart für die höhere Bitrate unterschieden werden können, ob die Teilnehmerstationen nur Empfänger (Betriebsart Z_F_RX ) oder auch Sender (Betriebsart Z_F_TX) ist, um die Betriebsart der Sende-/Empfangseinrichtung entsprechend zu schalten.

Denkbar ist, dass die Kommunikationssteuereinrichtung der Sende-/Empfangseinrichtung die Information, in welche Betriebsart die Sende-/Empfangseinrichtung zu schalten ist, mit einem Pulsmuster mit einer unterschiedlichen Anzahl von Bits seriell mitteilt.

Jedoch ist die Auswertung derartiger Pulsmuster aufwändig. Zudem kostet die Übertragung der Pulsmuster Zeit. Dies führt dazu, dass die einzelnen Pulse des Pulsmusters entweder sehr kurz sein müssen, damit alle während eines Bits übertragen werden können, oder dass weitere Bits im Rahmen eingefügt werden müssen, um genügend Zeit zu haben, die Pulsmuster zu übertragen. Da kurze Pulse mit Störungen verwechselt werden könnten, ist die Verwendung von kurzen Pulsen ein Nachteil.

DE 10 2018 203 707 A1 zeigt eine Sende-Empfangseinrichtung für ein Bussystem und ein Betriebsverfahren dafür. Jedoch ist keine Umschaltung zwischen Betriebsarten der Sende-Empfangseinrichtung gezeigt, bei der die Kommunikationssteuereinrichtung der Sende-Empfangseinrichtung mit nur einem Puls über einen Anschluss für ein von der der Sende-Empfangseinrichtung erzeugtes Empfangssignal signalisiert, dass die Betriebsart der Sende-Empfangseinrichtung umzuschalten ist.

### Offenbarung der Erfindung

Daher ist es Aufgabe der vorliegenden Erfindung, eine Sende-/Empfangseinrichtung und eine Kommunikationssteuereinrichtung für eine Teilnehmerstation eines seriellen Bussystems und ein Verfahren zur Kommunikation in einem seriellen Bussystem bereitzustellen, welche die zuvor genannten Probleme lösen. Insbesondere sollen eine Sende-/Empfangseinrichtung und eine Kommunikationssteuereinrichtung für eine Teilnehmerstation eines seriellen Bussystems und ein Verfahren zur Kommunikation in einem seriellen Bussystem bereitgestellt werden, bei welchen die Umschaltung der Betriebsart der Sende-/Empfangseinrichtung mit hoher Robustheit und zeitlich optimiert durchführbar ist.

Die Aufgabe wird durch eine Sende-/Empfangseinrichtung für eine Teilnehmerstation eines seriellen Bussystems mit den Merkmalen von Anspruch 1 gelöst. Die Sende-/Empfangseinrichtung hat einen ersten Anschluss zum Empfang eines Sendesignals von einer Kommunikationssteuereinrichtung, ein Sendemodul zum Senden des Sendesignals auf einen Bus des Bussystems, bei welchem Bussystem zum Austausch von Nachrichten zwischen Teilnehmerstationen des Bussystems mindestens eine erste Kommunikationsphase und eine zweite Kommunikationsphase verwendet werden, ein Empfangsmodul zum Empfang des Signals von dem Bus, wobei das Empfangsmodul ausgestaltet ist, aus dem von dem Bus empfangenen Signal ein digitales Empfangssignal zu erzeugen, einen zweiten Anschluss zum Senden des digitalen Empfangssignals an die Kommunikationssteuereinrichtung und zum Empfang eines Betriebsart-Umschaltsignals von der Kommunikationssteuereinrichtung, und einen Betriebsart-Umschaltblock zur Auswertung des an dem zweiten Anschluss von der Kommunikationssteuereinrichtung empfangenen Betriebsart-Umschaltsignals und des Sendesignals, wobei der Betriebsart-Umschaltblock ausgestaltet ist, das Sendemodul und/oder das Empfangsmodul abhängig von einem Ergebnis der Auswertung in eine von mindestens drei verschiedenen Betriebsarten zu schalten, wie in Anspruch 1 beschrieben.

Die Sende-/Empfangseinrichtung kann mit nur einem Puls als Signalisierung sicher entscheiden, in welche Betriebsart von zwei möglichen Betriebsarten umzuschalten ist. Dadurch wird die Umschaltbedingung zur Umschaltung einer Betriebsart Z_SL der ersten Kommunikationsphase in eine der zwei Betriebsarten Z_F_RX, Z_F_TX einer zweiten Kommunikationsphase robuster, da weniger anfällig gegen Störungen.

Zudem ist die Signalisierung und deren Auswertung in der Sende-/Empfangseinrichtung derart sicher, dass die Umschaltung insbesondere in die Betriebsart Z_F_TX nicht aus Versehen erfolgt, beispielsweise durch eine Störung auf der RxD Leitung. Im Ergebnis wird der Bus nicht gestört. Die von der Sende-/Empfangseinrichtung durchgeführte Auswertung zur Ermittlung der Umschaltbedingung kombiniert die Werte an dem ersten und zweiten Anschluss von der Kommunikationssteuereinrichtung und erhöht somit die Robustheit für die Umschaltung der Betriebsart der Sende-/Empfangseinrichtung.

Selbstverständlich sind die Signalisierung und deren Auswertung in der Sende-/Empfangseinrichtung auch verwendbar, wenn nur in eine Betriebsart umzuschalten ist, beispielsweise am Übergang von der zweiten Kommunikationsphase in die erste Kommunikationsphase.

Außerdem kann mit der Sende-/Empfangseinrichtung in einer der Kommunikationsphasen eine von CAN bekannte Arbitration beibehalten werden und dennoch die Übertragungsrate gegenüber CAN oder CAN FD nochmals beträchtlich gesteigert werden. Dies kann dadurch erreicht werden, dass zwei Kommunikationsphasen mit unterschiedlicher Bitrate verwendet werden und der Beginn der zweiten Kommunikationsphase, in welcher die Nutzdaten mit höherer Bitrate als in der Arbitration übertragen werden, für die Sende-/Empfangseinrichtung sicher kenntlich gemacht wird. Daher kann die Sende-/Empfangseinrichtung sicher von der Betriebsart der ersten Kommunikationsphase in die jeweils vorgegebene bzw. gewünschte Betriebsart der zweiten Kommunikationsphase umschalten oder zurück von der Betriebsart der zweiten Kommunikationsphase in die Betriebsart der ersten Kommunikationsphase. Als Folge davon ist eine deutliche Steigerung der Bitrate und damit der Übertragungsgeschwindigkeit vom Sender zum Empfänger realisierbar. Hierbei ist jedoch gleichzeitig eine große Fehlerrobustheit gewährleistet.

Das von der Sende-/Empfangseinrichtung durchgeführte Verfahren kann auch zum Einsatz kommen, wenn in dem Bussystem auch mindestens eine CAN-Teilnehmerstation und/oder mindestens eine CAN FD Teilnehmerstation vorhanden ist, die Nachrichten nach dem CAN-Protokoll und/oder CAN FD Protokoll senden.

Vorteilhafte weitere Ausgestaltungen der Sende-/Empfangseinrichtung sind in den abhängigen Ansprüchen angegeben.

Möglicherweise ist das an dem zweiten Anschluss empfangene Betriebsart-Umschaltsignal ein Puls mit einem Wert, der invers zu einem Wert des digitalen Empfangssignals ist, wobei der Betriebsart-Umschaltblock ausgestaltet ist, das Empfangsmodul von der ersten Betriebsart in die zweite Betriebsart zu schalten, wenn das Umschaltsignal den Puls aufweist und der Wert des Sendesignals dem Wert des Pulses entspricht, wobei der Betriebsart-Umschaltblock ausgestaltet ist, das Sendemodul und das Empfangsmodul von der ersten Betriebsart in die dritte Betriebsart zu schalten, wenn das Umschaltsignal den Puls aufweist und der Wert des Sendesignals invers zu dem Wert des Pulses ist. Hierbei ist es denkbar, dass die Sende-/Empfangseinrichtung in der zweiten Betriebsart nicht der Sender der Nachricht in der zweiten Kommunikationsphase ist, und dass die Sende-/Empfangseinrichtung in der dritten Betriebsart Sender der Nachricht in der zweiten Kommunikationsphase ist.

Der Betriebsart-Umschaltblock kann ausgestaltet sein, zumindest bei der Umschaltung von der zweiten Kommunikationsphase in die erste Kommunikationsphase die Umschaltung der Betriebsart vorzunehmen, wenn in dem von dem Empfangsmodul ausgegebenen Empfangssignal eine Flanke zwischen verschiedenen Buszuständen auftritt und die Sende-/Empfangseinrichtung nicht der Sender der Nachricht ist.

Der Betriebsart-Umschaltblock kann ausgestaltet sein, das Sendemodul in einer Betriebsart der zweiten Kommunikationsphase abzuschalten, in welcher die Sende-/Empfangseinrichtung nicht der Sender der Nachricht ist.

Möglicherweise ist der Betriebsart-Umschaltblock ausgestaltet, zumindest bei der Umschaltung von der zweiten Kommunikationsphase in die erste Kommunikationsphase die Umschaltung der Betriebsart vorzunehmen, wenn die Sende-/Empfangseinrichtung in der zweiten Kommunikationsphase Sender der Nachricht ist und in dem Sendesignal eine Flanke zwischen verschiedenen Buszuständen auftritt.

Die zuvor genannte Aufgabe wird zudem durch eine Kommunikationssteuereinrichtung für eine Teilnehmerstation eines seriellen Bussystems mit den Merkmalen von Anspruch 11 gelöst. Die Kommunikationssteuereinrichtung hat ein Kommunikationssteuermodul zum Erzeugen eines Sendesignals zum Steuern einer Kommunikation der Teilnehmerstation mit mindestens einer anderen Teilnehmerstation des Bussystems, bei welchem Bussystem zum Austausch von Nachrichten zwischen Teilnehmerstationen des Bussystems mindestens eine erste Kommunikationsphase und eine zweite Kommunikationsphase verwendet werden, einem ersten Anschluss zum Senden des Sendesignals an eine Sende-/Empfangseinrichtung, die zum Senden des Sendesignals auf einen Bus des Bussystems ausgestaltet ist, einem zweiten Anschluss zum Empfangen eines digitalen Empfangssignals von der Sende-/Empfangseinrichtung, wobei die Kommunikationssteuereinrichtung zum Erzeugen eines zusätzlichen Signals ausgestaltet ist, welches der Sende-/Empfangseinrichtung anzeigt, dass von der derzeitigen Betriebsart in eine andere Betriebsart von mindestens zwei verschiedenen Betriebsarten zu schalten ist, und welches zusätzlich für eine bei dem Kommunikationssteuermodul und einem Betriebsart-Umschaltblock der Sende-/Empfangseinrichtung voreinstellbare Zeitdauer eine interne Kommunikation zwischen dem Kommunikationssteuermodul und der Sende-/Empfangseinrichtung realisiert, und wobei das Kommunikationssteuermodul ausgestaltet ist, das zusätzliche Signal über den zweiten Anschluss an die Sende-/Empfangseinrichtung zu senden und gleichzeitig mit dem an dem ersten Anschluss gesendeten Sendesignal der Sende-/Empfangseinrichtung zu signalisieren, in welche der Betriebsarten die Sende-/Empfangseinrichtung zu schalten ist, wie in Anspruch 11 beschrieben.

Die Kommunikationssteuereinrichtung bietet dieselben Vorteile, wie sie zuvor in Bezug auf die Sende-/Empfangseinrichtung genannt sind.

Möglicherweise ist das Sendemodul ausgestaltet, in der ersten Kommunikationsphase Bits der Signale auf den Bus mit einer ersten Bitzeit zu treiben, die um mindestens den Faktor 10 größer als eine zweite Bitzeit von Bits ist, die das Sendemodul in der zweiten Kommunikationsphase auf den Bus treibt. Hierbei kann das Betriebsart-Umschaltsignal über den zweiten Anschluss zur Signalisierung, dass die Umschaltung der Betriebsart vorzunehmen ist, einen Puls mit einer Pulszeitdauer haben, die kleiner als die erste Bitzeit ist und größer bzw. länger als die zweite Bitzeit ist. Gemäß einem anderen Ausführungsbeispiel hat das Betriebsart-Umschaltsignal über den zweiten Anschluss mindestens einen Puls mit einer Pulszeitdauer, die in etwa gleich der zweiten Bitzeit ist oder kürzer als die zweite Bitzeit ist.

Gemäß einer Option ist das in der ersten Kommunikationsphase von dem Bus empfangene Signal mit einem anderen Physical Layer erzeugt als das in der zweiten Kommunikationsphase von dem Bus empfangene Signal.

Denkbar ist, dass in der ersten Kommunikationsphase ausgehandelt wird, welche der Teilnehmerstationen des Bussystems in der nachfolgenden zweiten Kommunikationsphase einen zumindest zeitweise exklusiven, kollisionsfreien Zugriff auf den Bus bekommt.

Die zuvor beschriebene Sende-/Empfangseinrichtung und die zuvor beschriebene Kommunikationssteuereinrichtung können Teil einer Teilnehmerstation eines Bussystems sein, das zudem einen Bus und mindestens zwei Teilnehmerstationen umfasst, welche über den Bus derart miteinander verbunden sind, dass sie seriell miteinander kommunizieren können. Hierbei weist mindestens eine der mindestens zwei Teilnehmerstationen eine zuvor beschriebene Sende-/Empfangseinrichtung sowie eine zuvor beschriebene Kommunikationssteuereinrichtung auf.

Die zuvor genannte Aufgabe wird zudem durch ein Verfahren zur Kommunikation in einem seriellen Bussystem nach Anspruch 15 gelöst. Das Verfahren wird mit einer Sende-/Empfangseinrichtung einer Teilnehmerstation für ein Bussystem ausgeführt, bei welchem zum Austausch von Nachrichten zwischen Teilnehmerstationen des Bussystems mindestens eine erste Kommunikationsphase und eine zweite Kommunikationsphase verwendet werden, wobei die Teilnehmerstation ein Sendemodul, ein Empfangsmodul, einen Betriebsart-Umschaltblock, einen ersten Anschluss und einen zweiten Anschluss aufweist, und wobei das Verfahren die Schritte aufweist, Empfangen, mit dem Empfangsmodul, eines Signals von dem Bus des Bussystems, Erzeugen, mit dem Empfangsmodul, aus dem von dem Bus empfangenen Signal eines digitalen Empfangssignals und Ausgeben des digitalen Empfangssignals an dem zweiten Anschluss, Auswerten, mit dem Betriebsart-Umschaltblock, eines an dem zweiten Anschluss von der Kommunikationssteuereinrichtung empfangenen Betriebsart-Umschaltsignals und eines an dem ersten Anschluss von der Kommunikationssteuereinrichtung empfangenen Sendesignals, und Schalten, mit dem Betriebsart-Umschaltblock, des Sendemoduls und/oder des Empfangsmoduls abhängig von einem Ergebnis der Auswertung in eine von mindestens drei verschiedenen Betriebsarten, wie in Anspruch 15 beschrieben.

Das Verfahren bietet dieselben Vorteile, wie sie zuvor in Bezug auf die Sende-/Empfangseinrichtung und/oder die Kommunikationssteuereinrichtung genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus von Nachrichten, die von Teilnehmerstationen des Bussystems gemäß dem ersten Ausführungsbeispiel gesendet werden können;
Fig. 3 ein vereinfachtes schematisches Blockschaltbild einer Teilnehmerstation des Bussystems gemäß dem ersten Ausführungsbeispiel;
Fig. 4 bis Fig. 7 einen zeitlichen Verlauf von Signalen gemäß dem ersten Ausführungsbeispiel für eine Zeitphase, bei der eine erste Betriebsart (Z_SL) der Sende-/Empfangseinrichtung, die in einer Arbitrationsphase (erste Kommunikationsphase) eingeschaltet ist, in eine Betriebsart (Z_F, genauer Z_F_TX) der Sende-/Empfangseinrichtung geschaltet wird, in welcher die Sende-/Empfangseinrichtung in einer Datenphase (zweite Kommunikationsphase) als Sender agiert; und
Fig. 8 und Fig. 9 einen zeitlichen Verlauf von Signalen entsprechend Fig. 4 bis Fig. 7 bei einer Sende-/Empfangseinrichtung, die von der Betriebsart (Z_SL) der Arbitrationsphase (erste Kommunikationsphase) in eine Betriebsart (Z_F, genauer Z_F_RX) geschaltet wird, in welcher die Sende-/Empfangseinrichtung in der Datenphase (zweite Kommunikationsphase) nur als Empfänger agiert.

In den Figuren sind gleiche oder funktionsgleiche Elemente, sofern nichts anderes angegeben ist, mit denselben Bezugszeichen versehen.

### Beschreibung der Ausführungsbeispiele

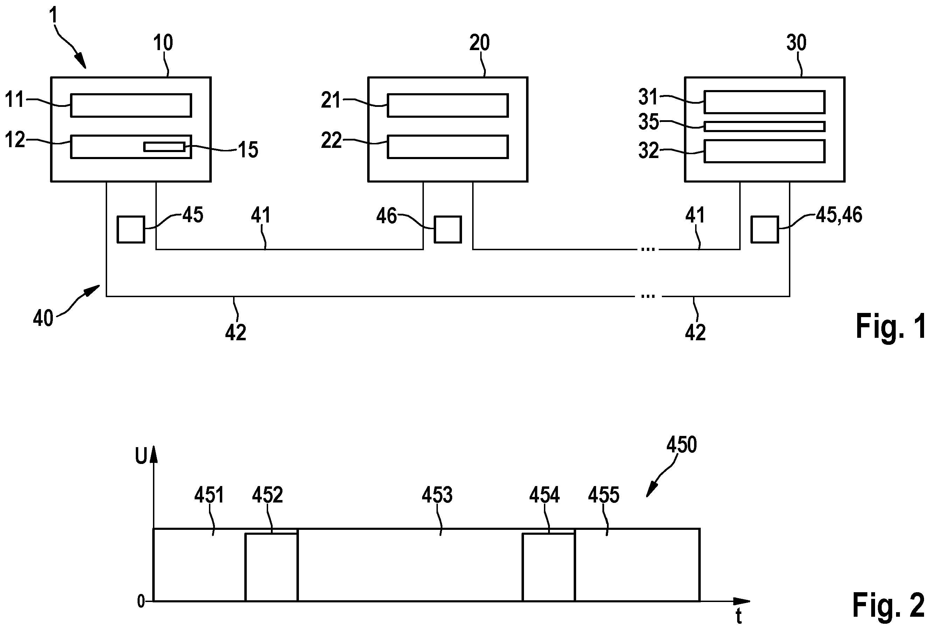

Fig. 1 zeigt als Beispiel ein Bussystem 1, das insbesondere grundlegend für ein CAN-Bussystem, ein CAN FD-Bussystem, ein CAN FD-Nachfolge-Bussystem, und/oder Abwandlungen davon, ausgestaltet ist, wie nachfolgend beschrieben.

Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können auch CAN_H und CAN_L genannt werden und dienen zur elektrischen Signalübertragung nach Einkopplung der dominanten Pegel bzw. Erzeugung von rezessiven Pegeln für ein Signal im Sendezustand. Über den Bus 40 sind Nachrichten 45, 46 in der Form von Signalen zwischen den einzelnen Teilnehmerstationen 10, 20, 30 seriell übertragbar. Die Teilnehmerstationen 10, 20, 30 sind beispielsweise Steuergeräte, Sensoren, Anzeigevorrichtungen, usw. eines Kraftfahrzeugs.

Wie in Fig. 1 gezeigt, hat die Teilnehmerstation 10 eine Kommunikationssteuereinrichtung 11, eine Sende-/Empfangseinrichtung 12 und einen Umschaltblock 15. Die Teilnehmerstation 20 hat dagegen eine Kommunikationssteuereinrichtung 21 und eine Sende-/Empfangseinrichtung 22. Die Teilnehmerstation 30 hat eine Kommunikationssteuereinrichtung 31, eine Sende-/Empfangseinrichtung 32 und einen Umschaltblock 35. Die Sende-/Empfangseinrichtungen 12, 22, 32 der Teilnehmerstationen 10, 20, 30 sind jeweils direkt an den Bus 40 angeschlossen, auch wenn dies in Fig. 1 nicht veranschaulicht ist.

In jeder Teilnehmerstation 10, 20, 30 werden die Nachrichten 45, 46 kodiert in Form von Rahmen über eine TXD-Leitung und eine RXD-Leitung bitweise zwischen der jeweiligen Kommunikationssteuereinrichtung 11, 21, 31 und der zugehörigen Sende-/Empfangseinrichtungen 12, 22, 32 ausgetauscht. Dies ist nachfolgend genauer beschrieben.

Die Kommunikationssteuereinrichtungen 11, 21, 31 dienen jeweils zur Steuerung einer Kommunikation der jeweiligen Teilnehmerstation 10, 20, 30 über den Bus 40 mit mindestens einer anderen Teilnehmerstation der Teilnehmerstationen 10, 20, 30, die an den Bus 40 angeschlossen sind.

Die Kommunikationssteuereinrichtungen 11, 31 erstellen und lesen erste Nachrichten 45, die beispielsweise modifizierte CAN Nachrichten 45 sind, die nachfolgend auch CAN XL Nachrichten 45 genannt werden. Hierbei sind die modifizierten CAN Nachrichten 45 oder CAN XL Nachrichten 45 auf der Grundlage eines CAN FD-Nachfolgeformats aufgebaut, das in Bezug auf Fig. 2 detaillierter beschrieben ist. Die Kommunikationssteuereinrichtungen 11, 31 können zudem ausgeführt sein, um je nach Bedarf eine CAN XL-Nachricht 45 oder eine CAN FD-Nachricht 46 für die Sende-/Empfangseinrichtungen 12, 32 bereitzustellen oder von dieser zu empfangen. Die Kommunikationssteuereinrichtungen 11, 31 erstellen und lesen also eine erste Nachricht 45 oder zweite Nachricht 46, wobei sich die erste und zweite Nachricht 45, 46 durch ihren Datenübertragungsstandard unterscheiden, nämlich in diesem Fall CAN XL oder CAN FD.

Die Kommunikationssteuereinrichtung 21 kann wie ein herkömmlicher CAN-Protokollkontroller bzw. CAN-Controller nach ISO 11898-1:2015 ausgeführt sein, insbesondere wie ein CAN FD toleranter Classical CAN-Controller oder ein CAN FD-Controller. Die Kommunikationssteuereinrichtung 21 erstellt und liest zweite Nachrichten 46, beispielsweise Classical CAN Nachrichten oder CAN FD-Nachrichten 46. Bei den CAN FD-Nachrichten 46 kann eine Anzahl von 0 bis zu 64 Datenbytes umfasst sein, die noch dazu mit einer deutlich schnelleren Datenrate als bei einer Classical CAN-Nachricht übertragen werden. Im letzteren Fall ist die Kommunikationssteuereinrichtung 21 wie ein herkömmlicher CAN FD-Controller ausgeführt.

Die Sende-/Empfangseinrichtungen 12, 32 können bis auf die nachfolgend noch genauer beschriebenen Unterschiede als CAN XL-Transceiver ausgeführt sein. Die Sende-/Empfangseinrichtungen 12, 32 sind zusätzlich oder alternativ wie ein herkömmlicher CAN FD Transceiver ausführbar. Die Sende-/Empfangseinrichtung 22 kann wie ein herkömmlicher CAN Transceiver oder CAN FD Transceiver ausgeführt sein.

Mit den beiden Teilnehmerstationen 10, 30 ist eine Bildung und dann Übertragung von Nachrichten 45 mit dem CAN XL Format sowie der Empfang solcher Nachrichten 45 realisierbar.

Fig. 2 zeigt für die Nachricht 45 einen CAN XL Rahmen 450, wie er von der Sende-/Empfangseinrichtung 12 oder der Sende-/Empfangseinrichtung 32 gesendet wird. Der CAN XL-Rahmen 450 ist für die CAN-Kommunikation auf dem Bus 40 in unterschiedliche Kommunikationsphasen 451 bis 455 unterteilt, nämlich eine Arbitrationsphase 451, eine erste Umschaltphase 452, die am Ende der Arbitrationsphase 451 liegt, eine Datenphase 453, eine zweite Umschaltphase 454, die am Ende der Datenphase 453 liegt, und eine Rahmenendphase 455.

In der Arbitrationsphase 451 wird beispielsweise am Anfang ein Bit gesendet, das auch SOF-Bit genannt wird und den Beginn des Rahmens bzw. Start of Frame anzeigt. In der Arbitrationsphase 451 wird außerdem ein Identifizierer mit beispielsweise 11 Bit zur Identifikation des Senders der Nachricht 45 gesendet. Bei der Arbitration wird mit Hilfe des Identifizierers bitweise zwischen den Teilnehmerstationen 10, 20, 30 ausgehandelt, welche Teilnehmerstation 10, 20, 30 die Nachricht 45, 46 mit der höchsten Priorität senden möchte und daher für die nächste Zeit zum Senden in der Umschaltphase 452 und der anschließenden Datenphase 453 einen exklusiven Zugriff auf den Bus 40 des Bussystems 1 bekommt.

In der ersten Umschaltphase 452 wird bei dem vorliegenden Ausführungsbeispiel die Umschaltung von der Arbitrationsphase 451 in die Datenphase 453 vorbereitet. Die Umschaltphase 452 kann ein Bit AL1 haben, das die Bitdauer T_B1 eines Bits der Arbitrationsphase 451 hat und mit dem Physical Layer der Arbitrationsphase 451 gesendet wird. Der Physical Layer entspricht der Bitübertragungsschicht oder Schicht 1 des bekannten OSI-Modells (Open Systems Interconnection Modell).

In der Datenphase 453 kann nach einem DH1-Bit und einem DL1-Bit zunächst ein beispielsweise 8 Bit langer Datenfeld-Identifizierer gesendet werden, der den Typ des Inhaltes im Datenfeld identifiziert. Z.B. kann der Datenfeld-Identifizierer den Wert 9 enthalten welches zum Beispiel aussagt, dass sich im Datenfeld ein Datenpaket befindet, das gemäß dem Internet Protokoll Version 4 (IPv4) aufgebaut ist. Im Anschluss an den Datenfeld-Identifizierer kann zum Beispiel ein 11 Bit langer Datenlängencode (Data-Length-Code) gesendet werden, der dann zum Beispiel Werte von 1 bis zu 2048oder einen sonstigen Wert mit der Schrittweite von 1 annehmen kann. Der Datenlängencode kann alternativ weniger oder mehr Bit umfassen, so dass der Wertebereich und die Schrittweite andere Werte annehmen können. Anschließend folgen weitere Felder wie zum Beispiel das Kopf-Prüfsummenfeld. Danach werden die Nutzdaten des CAN XL-Rahmens 450 bzw. der Nachricht 45 gesendet, was auch als Datenfeld der Nachricht 45 bezeichnet werden kann. Die Nutzdaten können entsprechend dem Wertebereich des Datenlängencodes Daten aufweisen, beispielsweise mit einer Anzahl von bis zu 2048 Bytes oder einer größeren Anzahl von Bytes oder eine sonstige beliebige Anzahl von Daten. Am Ende der Datenphase 453 kann beispielsweise in einem Prüfsummenfeld eine Prüfsumme über die Daten der Datenphase 453 sowie der Daten der Arbitrationsphase 451 enthalten sein. Der Sender der Nachricht 45 kann Stuffbits nach jeweils einer vorbestimmten Anzahl von gleichen Bits, insbesondere 10 gleichen Bits, als inverses Bit in den Datenstrom einfügen. Insbesondere ist die Prüfsumme eine Rahmenprüfsumme F_CRC, mit welcher alle Bits des Rahmens 450 bis zum Prüfsummenfeld abgesichert werden. Danach kann ein FCP-Feld mit vorbestimmtem Wert, beispielsweise 1100, folgen.

In der zweiten Umschaltphase 454 wird bei dem vorliegenden Ausführungsbeispiel die Umschaltung von der Datenphase 453 in die Rahmenendphase 455 vorbereitet. Dabei wird eine in mindestens einem Bit enthaltene Protokollformatinformation gesendet, welche geeignet ist, die Umschaltung zu realisieren. Die Umschaltphase 454 kann ein Bit AH1 haben, das die Bitdauer T_B1 eines Bits der Arbitrationsphase 451 hat, jedoch mit dem Physical Layer der Datenphase 453 gesendet wird.

In der Rahmenendphase 455 kann nach zwei Bits AL2, AH2 in einem Endefeld in der Rahmenendphase 455 mindestens ein Acknowledge-Bit ACK enthalten sein. Danach kann eine Folge von 7 gleichen Bits folgen, welche das Ende des CAN XL-Rahmens 450 anzeigen. Mit dem mindestens einen Acknowledge-Bit ACK kann mitgeteilt werden, ob ein Empfänger in dem empfangenen CAN XL-Rahmen 450 bzw. der Nachricht 45 einen Fehler entdeckt hat oder nicht.

Mindestens in der Arbitrationsphase 451 und der Rahmenendphase 455 wird ein Physical Layer wie bei CAN und CAN-FD verwendet. Zusätzlich kann in der ersten Umschaltphase 452 zumindest teilweise, also am Anfang, ein Physical Layer wie bei CAN und CAN-FD verwendet werden. Zusätzlich kann in der zweiten Umschaltphase 454 zumindest teilweise, also am Ende, ein Physical Layer wie bei CAN und CAN-FD verwendet werden.

Ein wichtiger Punkt während der Phasen 451, 455, am Anfang der Phase 452 und am Ende der Phase 454 ist, dass das bekannte CSMA/CR-Verfahren Verwendung findet, welches gleichzeitigen Zugriff der Teilnehmerstationen 10, 20, 30 auf den Bus 40 erlaubt, ohne dass die höher priorisierte Nachricht 45, 46 zerstört wird. Dadurch können dem Bussystem 1 relativ einfach weitere Bus-Teilnehmerstationen 10, 20, 30 hinzugefügt werden, was sehr vorteilhaft ist.

Das CSMA/CR-Verfahren hat zur Folge, dass es sogenannte rezessive Zustände auf dem Bus 40 geben muss, welche von anderen Teilnehmerstationen 10, 20, 30 mit dominanten Zuständen auf dem Bus 40 überschrieben werden können.

Die Arbitration am Anfang eines Rahmens 450 bzw. der Nachricht 45, 46 und das Acknowledgement in der Rahmenendphase 455 des Rahmens 450 bzw. der Nachricht 45, 46 ist nur dann möglich, wenn die Bitzeit deutlich mehr als doppelt so lang ist wie die Signal-Laufzeit zwischen zwei beliebigen Teilnehmerstationen 10, 20, 30 des Bussystems 1. Daher wird die Bitrate in der Arbitrationsphase 451, der Rahmenendphase 455 und zumindest teilweise in den Umschaltphasen 452, 454 langsamer gewählt als in der Datenphase 453 des Rahmens 450. Insbesondere wird die Bitrate in den Phasen 451, 452, 454, 455 als 500 kbit/s gewählt, woraus eine Bitzeit von ca. 2µs folgt, wohingegen die Bitrate in der Datenphase 453 als 5 bis 10 Mbit/s oder mehr gewählt wird, woraus eine Bitzeit von ca. 0,1µs und kürzer folgt. Somit ist die Bitzeit des Signals in den anderen Kommunikationsphasen 451, 452, 454, 455 um mindestens den Faktor 10 größer als die Bitzeit des Signals in der Datenphase 453.

Ein Sender der Nachricht 45, beispielsweise die Teilnehmerstation 10, beginnt ein Senden von Bits der Umschaltphase 452 und der anschließenden Datenphase 453 auf den Bus 40 erst, wenn die Teilnehmerstation 10 als der Sender die Arbitration gewonnen hat und die Teilnehmerstation 10 als Sender damit zum Senden einen exklusiven Zugriff auf den Bus 40 des Bussystems 1 hat. Der Sender kann entweder nach einem Teil der Umschaltphase 452 auf die schnellere Bitrate und/oder den anderen Physical Layer wechseln oder erst mit dem ersten Bit, also mit dem Beginn, der anschließenden Datenphase 453 auf die schnellere Bitrate und/oder den anderen Physical Layer wechseln.

Ganz allgemein können in dem Bussystem mit CAN XL im Vergleich zu CAN oder CAN FD insbesondere folgende abweichenden Eigenschaften realisiert werden:
a) Übernahme und ggf. Anpassung bewährter Eigenschaften, die für die Robustheit und Anwenderfreundlichkeit von CAN und CAN FD verantwortlich sind, insbesondere Rahmenstruktur mit Identifier und Arbitrierung nach dem CSMA/CR-Verfahren,
b) Steigerung der Netto-Datenübertragungsrate auf etwa 10 Megabit pro Sekunde, und
c) Anheben der Größe der Nutzdaten pro Rahmen auf etwa 2kbyte oder auf einen beliebigen anderen Wert.

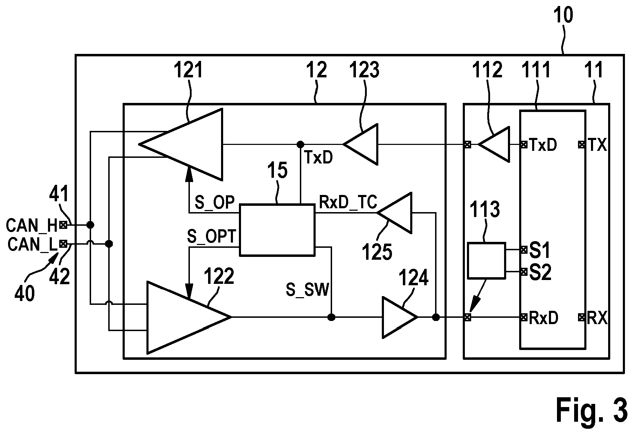

Fig. 3 zeigt den grundlegenden Aufbau der Teilnehmerstation 10 mit der Kommunikationssteuereinrichtung 11, der Sende-/Empfangseinrichtung 12 und dem Umschaltblock 15. Die Teilnehmerstation 30 ist in ähnlicher Weise aufgebaut, wie in Fig. 3 gezeigt, außer dass der Block 35 separat von der Kommunikationssteuereinrichtung 31 und der Sende-/Empfangseinrichtung 32 vorgesehen ist. Daher werden die Teilnehmerstation 30 und der Block 35 nicht separat beschrieben. Die nachfolgend beschriebenen Funktionen des Umschaltblocks 15 sind bei dem Umschaltblock 35 identisch vorhanden.

Gemäß Fig. 3 hat die Kommunikationssteuereinrichtung 11 zudem ein Kommunikationssteuermodul 111, einen Sendesignal-Ausgangstreiber 112 und ein RxD-Anschluss-Konfigurationsmodul 113. Die Kommunikationssteuereinrichtung 11 ist als Mikrocontroller ausgestaltet oder weist einen Mikrocontroller auf. Die Kommunikationssteuereinrichtung 11 verarbeitet Signale einer beliebigen Anwendung, beispielsweise eines Steuergeräts für einen Motor, eines Sicherheitssystems für eine Maschine oder ein Fahrzeug, oder sonstige Anwendungen.

Nicht gezeigt in Fig. 3 ist jedoch eine System-ASIC (ASIC = Anwendungsspezifische Integrierte Schaltung), die alternativ ein System Basis-Chip (SBC) sein kann, auf dem mehrere für eine Elektronik-Baugruppe der Teilnehmerstation 10 notwendige Funktionen zusammengefasst sind. In dem System-ASIC können unter anderem die Sende-/Empfangseinrichtung 12 und eine nicht dargestellte Energieversorgungseinrichtung eingebaut sein, welche die Sende-/Empfangseinrichtung 12 mit elektrischer Energie versorgt. Die Energieversorgungseinrichtung liefert üblicherweise eine Spannung CAN_Supply von 5 V. Je nach Bedarf kann die Energieversorgungseinrichtung jedoch eine andere Spannung mit einem anderen Wert liefern und/oder als Stromquelle ausgestaltet sein.

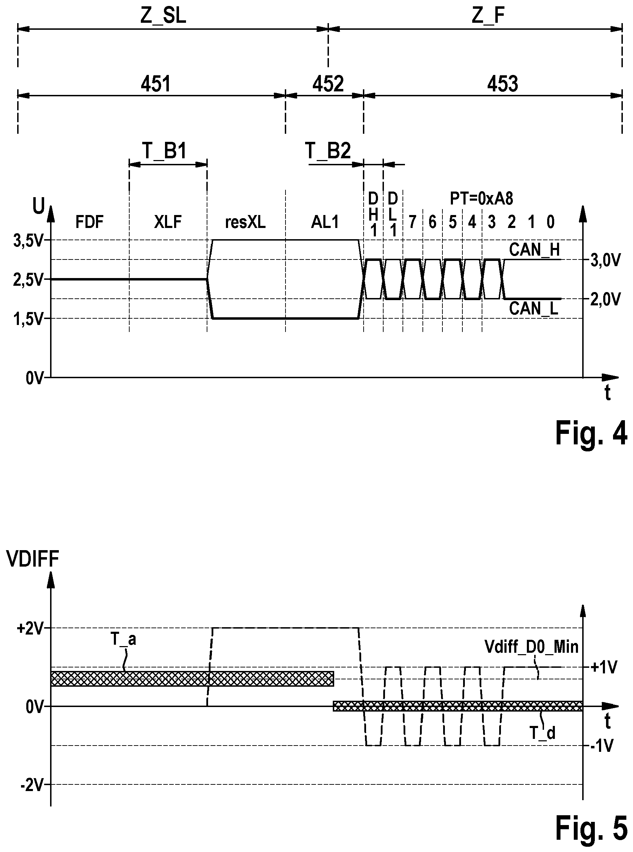

Gemäß Fig. 3 hat die Sende-/Empfangseinrichtung 12 zudem ein Sendemodul 121, ein Empfangsmodul 122, einen Treiber 123 für das Sendesignal TxD, einen Empfangssignal-Ausgangstreiber 124 und einen Treiber 125, der ein Signal RxD_TC an den Umschaltblock 15 ausgibt. Der Umschaltblock 15 bildet aus dem Signal RxD_TC, dem Signal TxD und einem Signal S_SW, welches das Ausgangssignal des Empfangsmoduls 122 ist, ein Betriebszustand-Schaltsignal S_OP zum Schalten des Sendemoduls 121. Zusätzlich bildet der Umschaltblock 15 aus dem Signal RxD_TC und den Signalen TxD, S_SW ein Betriebszustand-Schaltsignal S_OPT zum Schalten von Empfangsschwellen des Empfangsmoduls 122. Der Umschaltblock 126 erkennt, dass eine Signalisierung von dem Kommunikationssteuermodul 111 vorliegt, indem der Umschaltblock 126 das Signal RxD_TC und das Signal S_SW vergleicht, denn das Signal RxD_TC enthält mindestens einen Puls, der von dem Kommunikationssteuermodul 111 gesendet wird. Dies ist in Bezug auf Fig. 4 bis Fig. 9 nachfolgend genauer beschrieben.

Das Sendemodul 121 von Fig. 3 wird auch als Transmitter bezeichnet. Das Empfangsmodul 122 wird auch als Receiver bezeichnet. Die Verwendung des Signals TxD im Umschaltblock 126 ist optional, wie auch in Fig. 3 durch die gestrichelte Linie am Signal TxD gezeigt. Das Signal RxD und das Signal RxD_TC sind vom Signalverlauf gleich, wobei die beiden Signale durch einen Treiber 125 getrennt sind.

Der Umschaltblock 15 kann als Schaltblock ausgestaltet sein, der insbesondere mindestens ein Flipflop aufweist. Die Funktion des Umschaltblocks 15 ist nachfolgend in Bezug auf Fig. 4 bis Fig. 9 noch genauer beschrieben.

Auch wenn nachfolgend immer von der Sende-/Empfangseinrichtung 12 gesprochen wird, ist es alternativ möglich, das Empfangsmodul 122 in einer separaten Einrichtung extern von dem Sendemodul 121 vorzusehen. Das Sendemodul 121 und das Empfangsmodul 122 können wie bei einer herkömmlichen Sende-/Empfangseinrichtung 22 aufgebaut sein. Das Sendemodul 121 kann insbesondere mindestens einen Operationsverstärker und/oder einen Transistor aufweisen. Das Empfangsmodul 122 kann insbesondere mindestens einen Operationsverstärker und/oder einen Transistor aufweisen.

Wie in Fig. 3 gezeigt, ist die Sende-/Empfangseinrichtung 12 an den Bus 40 angeschlossen, genauer gesagt dessen erste Busader 41 für CAN_H und dessen zweite Busader 42 für CAN_L. Die erste und zweite Busader 41, 42 sind in der Sende-/Empfangseinrichtung 12 mit dem Sendemodul 121 und mit dem Empfangsmodul 122 verbunden. Die Spannungsversorgung für die Energieversorgungseinrichtung zum Versorgen der ersten und zweiten Busader 41, 42 mit elektrischer Energie erfolgt wie üblich. Außerdem ist die Verbindung mit Masse bzw. CAN_GND wie üblich realisiert. Ähnliches gilt für die Terminierung der ersten und zweiten Busader 41, 42 mit einem Abschlusswiderstand.

Der Umschaltblock 15 ist ausgestaltet, in einer empfangenen Nachricht 45 vom Bus 40, den Beginn der jeweiligen Umschaltphasen 452, 454 zu erkennen und dann die Eigenschaften der Sende-/Empfangseinrichtung 12 umzuschalten. Dabei kann der Umschaltblock 15 zwischen den folgenden Betriebsarten der Sende-/Empfangseinrichtung 12 umschalten:
a) erste Betriebsart: Z_SL = Sende-/Empfangseigenschaften für die Arbitrationsphase 451,
   - Sendemodul 121 in der Sende-/Empfangseinrichtung 12 erzeugt dominante und rezessive Zustände auf dem Bus 40,
   - Empfangsmodul 122 arbeitet mit einer Empfangsschwelle T_a von üblicherweise etwa 0,7 V.
c) zweite Betriebsart: Sende-/Empfangseigenschaften für die Datenphase 453 als Empfänger (Empfangsknoten),
   - Sendemodul 121 in der Sende-/Empfangseinrichtung 12 erzeugt rezessive Zustände oder wird optional nach der Umschaltphase 452 ausgeschaltet, da die Sende-/Empfangseinrichtung 12 kein Sender ist, sondern nur als Empfänger der Nachricht 45 bzw. eines Rahmens 450 agiert,
   - Empfangsmodul 122 arbeitet mit einer Empfangsschwelle T_d von üblicherweise etwa 0,0 V.
c) dritte Betriebsart: Sende-/Empfangseigenschaften für die Datenphase 453 als Sender (Sendeknoten),
   - Sendemodul 121 in der Sende-/Empfangseinrichtung 12 treibt einen 0-Zustand oder einen 1-Zustand abhängig von dem TxD-Signal, da die Sende-/Empfangseinrichtung 12 als Sender der Nachricht 45 bzw. eines Rahmens 450 agiert,
   - Empfangsmodul 122 arbeitet mit einer Empfangsschwelle T_d von üblicherweise etwa 0,0 V.

Das RxD-Anschluss-Konfigurationsmodul 113 der Kommunikationssteuereinrichtung 11 konfiguriert den Anschluss RxD je nach der erforderlichen Kommunikationsrichtung unter Verwendung von Signalen S1, S2 an dem Eingang des Moduls 113, wie nachfolgend beschrieben. Das Signal S1 kann als RxD_out_ena bezeichnet werden, welches kein Treiben des zusätzlichen Signals RxD_TC über den RxD-Anschluss (erste Anschluss-Betriebsart) oder ein Treiben des zusätzlichen Signals RxD_TC über den RxD-Anschluss (zweite Anschluss-Betriebsart) ermöglicht. Das Signal S2 kann als RxD_out_val bezeichnet werden. Je nach Wert des Signals S2 treibt die Kommunikationssteuereinrichtung 11 den Anschluss RxD an den Umschaltzeitpunkten zwischen den zwei verschiedenen Kommunikationsphasen zur Signalisierung der einzustellenden Betriebsart an die Sende-/Empfangseinrichtung 12, also zum einen in der ersten Umschaltphase 452 zur Umschaltung zwischen Arbitrationsphase 451 und Datenphase 453 und zum anderen in der zweiten Umschaltphase 454 zur Umschaltung zwischen Datenphase 453 und Rahmenendphase 455. Optional kann die Kommunikationssteuereinrichtung 11, je nach Wert des Signals S2, den Anschluss RxD in einer dritten Anschluss-Betriebsart treiben, die auch "Talk-Mode" genannt werden kann, in welcher eine interne Kommunikation zwischen den Einrichtungen 11, 12 möglich ist. Ansonsten ist der Anschluss RxD, wie insbesondere bei CAN üblich, für die Kommunikationssteuereinrichtung 11 ein Eingang (Input), also kein Ausgang, wie zuvor beschrieben, so dass die Kommunikationssteuereinrichtung 11 den Anschluss RxD nicht treibt. Der Anschluss RxD kann somit mit Hilfe des RxD-Anschluss-Konfigurationsmoduls 113 und der Signale S1, S2 bidirektional betrieben werden. In anderen Worten, der Anschluss RxD ist ein bidirektionaler Anschluss.

Hierfür sind die Kommunikationssteuereinrichtung 11 und der Ausgangstreiber 124 derart ausgestaltet, dass die Kommunikationssteuereinrichtung 11 den Anschluss RxD beim Treiben zum Zweck der Signalisierung stärker treibt als der Ausgangstreiber 124. Dadurch ist vermieden, dass der Wert der RxD-Leitung unbestimmt sein könnte, wenn sowohl die Kommunikationssteuereinrichtung 11 als auch der Ausgangstreiber 124 den Anschluss RxD treibt und es zu einer Überlagerung der beiden Signal-Quellen an dem Anschluss RxD kommt. Bei einer solchen Überlagerung der beiden Signal-Quellen an dem Anschluss RxD setzt sich somit immer die Kommunikationssteuereinrichtung 11 durch. Dadurch ist der Wert der RxD-Leitung immer bestimmt.

Damit kann der Umschaltblock 15 die Möglichkeit bereitstellen, eine der zuvor genannten drei Betriebsarten in der Sende-/Empfangseinrichtung 12 einzustellen, die über den RxD-Anschluss und TxD-Anschluss signalisiert werden. Ein zusätzlicher Anschluss in Form eines anderen Pins an der Sende-/Empfangseinrichtung 12 und damit auch an der Kommunikationssteuereinrichtung 11 ist dafür nicht erforderlich.

Der Umschaltblock 15 ist hierfür gemäß Fig. 3 mit den drei Eingängen versehen, über die in den Umschaltblock 15 ein Signal RxD_TC, das Signal TxD und das Signal S_SW eingespeist werden. Das Signal RxD_TC basiert auf einem Signal, das von der Kommunikationssteuereinrichtung 11 über den Anschluss für das RxD-Signal an die Sende-/Empfangseinrichtung 12 gesendet wird. Mit dem Signal RxD_TC signalisiert die Kommunikationssteuereinrichtung 11 der Sende-/Empfangseinrichtung 12 zum einen, dass die Sende-/Empfangseinrichtung 12 nun die Umschaltung in die Betriebsart für die Datenphase 453 vorzunehmen hat. Mit dem Signal TxD signalisiert die Kommunikationssteuereinrichtung 11 der Sende-/Empfangseinrichtung 12, in welche der Betriebsarten Z_F_RX, Z_F_TX die Umschaltung vorzunehmen ist. Dies ist insbesondere bei der Umschaltung von der Arbitrationsphase 451 zu der Datenphase 453 hilfreich. Am Ende der Datenphase 453 kann die Kommunikationssteuereinrichtung 11 mit dem Signal RxD_TC die Signalisierung für die Umschaltung der Sende-/Empfangseinrichtung 12 von jeder der beiden Betriebsarten der Datenphase 453 in die Betriebsart Z_SL für die Arbitrationsphase 451 vornehmen. Außerdem können mit dem Signal RxD_TC beliebige andere Informationen von der Kommunikationssteuereinrichtung 11 an die Sende-/Empfangseinrichtung 12 gesendet werden, wie zuvor erwähnt.

Gemäß Fig. 3 führt die Sende-/Empfangseinrichtung 12 das Signal RxD_TC von dem Anschluss RxD über den Treiber 125 zum Anschluss des Umschaltblocks 15 für das Signal RxD_TC. Das Signal S_SW wird dagegen aus dem vom Bus 40 empfangenen Signal generiert. Das Signal RxD_TC wird zwischen dem Anschluss für das RxD-Signal und dem Ausgang des Empfangssignaltreibers 124 zu dem Umschaltblock 15 geleitet. Das Signal S_SW wird von dem Ausgang des Empfangsmoduls 122 und vor dem Eingang des Empfangssignaltreibers 124 zu dem Umschaltblock 15 geleitet.

Erkennt der Umschaltblock 15 die Umschaltphase 452, wird mit dem aus dem Umschaltblock 15 ausgegebenen Signal S_OP der Betriebszustand des Sendemoduls 121 und mit dem Signal S_OP der Betriebszustand des Empfangsmoduls 122 eingestellt und damit wird die Betriebsart der Sende-/Empfangseinrichtung 12 geschaltet. Dies ist in Bezug auf Fig. 4 bis Fig. 9 näher erläutert.

Im Betrieb des Bussystems 1 setzt das Sendemodul 121, wenn die Teilnehmerstation 10 als Sender agiert, ein Sendesignal TxD der Kommunikationssteuereinrichtung 11 in entsprechende Signale CAN_H und CAN_L für die Busadern 41, 42 um und sendet diese Signale CAN_H und CAN_L auf den Bus 40, wie in Fig. 4 für den Übergang von Arbitrationsphase 451 mit der Umschaltphase 452 zu der Datenphase 453 gezeigt. Dabei wird von einer Bitdauer T_B1 der Arbitrationsphase 451 zu einer kürzeren Bitdauer T_B2 der Datenphase 453 umgeschaltet. Auch wenn hier für die Sende-/Empfangseinrichtung 12 die Signale CAN_H und CAN_L genannt sind, so sind diese in Bezug auf die Nachricht 45 als Signale CAN-XL_H und CAN-XL_L zu verstehen, die in der Datenphase 453 von den herkömmlichen Signalen CAN_H und CAN_L in mindestens einem Merkmal abweichen, insbesondere in Bezug auf die Bildung der Buszustände für die verschiedenen Datenzustände des Signals TxD und/oder in Bezug auf die Spannung bzw. den Physical Layer und/oder die Bitrate. Bei dem Beispiel von Fig. 4 weichen die Signale CAN-XL_H und CAN-XL_L in der Datenphase 453 in Bezug auf die Bildung der Buszustände für die verschiedenen Datenzustände des Signals TxD und in Bezug auf die Spannung bzw. den Physical Layer und die Bitrate von den herkömmlichen Signalen CAN_H und CAN_L in den Phasen 451, 452 ab.

Wie in Fig. 5 gezeigt, bildet sich in Folge der Signale auf dem Bus 40 ein Differenzsignal VDIFF = CAN_H - CAN_L aus. Mit Ausnahme eines Leerlauf- oder Bereitschaftszustands (Idle oder Standby), hört die Sende-/Empfangseinrichtung 12 mit dem Empfangsmodul 122 im Normalbetrieb immer auf eine Übertragung von Daten bzw. Nachrichten 45, 46 auf dem Bus 40 und zwar unabhängig davon, ob die Teilnehmerstation 10 Sender der Nachricht 45 ist oder nicht. Hierbei verwendet das Empfangsmodul 122 in der Arbitrationsphase 451 und zu Beginn der Umschaltphase 452 die Empfangsschwelle T_a. Am Ende der Umschaltphase 452 und in der Datenphase 453 verwendet das Empfangsmodul 122 ausschließlich die Empfangsschwelle T_d, die bei 0V bzw. zwischen +/- 0.1V liegt. Der minimale Wert für eine Differenzspannung eines Buszustands D0 in der Datenphase 453, der als VDIFF_D0_Min bezeichnet ist, liegt in dem unteren Bereich für die Empfangsschwelle T_d. Das Empfangsmodul 122 bildet dabei ein Signal S_SW und gibt dieses über den Empfangssignal-Ausgangstreiber 124 als digitales Empfangssignal RxD an die Kommunikationssteuereinrichtung 11 weiter, wie in Fig. 3 gezeigt.

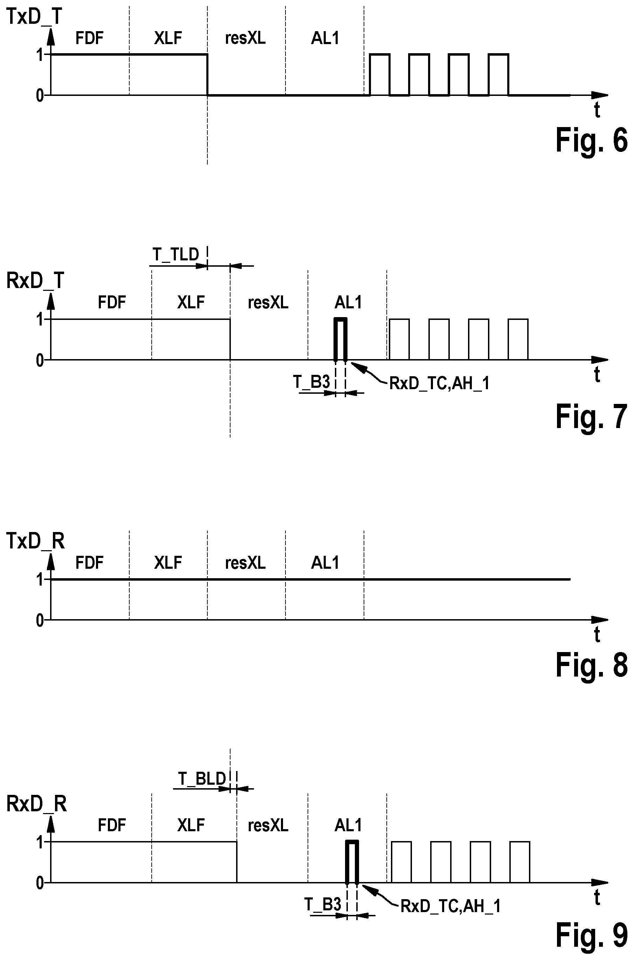

Fig. 6 zeigt einen Teil des Sendesignals TxD_T, das beispielsweise von der Teilnehmerstation 10 auf den Bus 40 gesendet wird. Am Ende der Arbitrationsphase 451 ist klar, welche der Teilnehmerstationen 10, 30 in der nachfolgenden Datenphase 453 als Sender und welche nur als Empfänger agiert. Bei dem vorliegenden Beispiel agiert die Teilnehmerstation 10 als Sender und auch als Empfänger, die Teilnehmerstation 30 nur als Empfänger.

Gemäß Fig. 8 empfängt die Teilnehmerstation 10 als Sender und Empfänger, mit einer vorbestimmten Verzögerungszeitdauer T_TLD, die auch als Transmitter Loop Delay bezeichnet wird, ein Signal und bildet daraus mit dem Empfangsmodul 122 und dem Treiber 124 ein digitales Empfangssignal RxD_T.

Wie in Fig. 4 bis Fig. 6 gezeigt, sendet die Kommunikationssteuereinrichtung 11 vor der Umschaltphase 452 in dem Sendesignal TxD nacheinander ein FDF-Bit und ein XLF-Bit jeweils mit dem Zustand High (erster binärer Signalzustand). Danach folgt ein resXL-Bit, das mit dem Zustand Low (zweiter binärer Signalzustand) gesendet wird und von einem AL1-Bit gefolgt wird, das ebenfalls mit dem Zustand Low (zweiter binärer Signalzustand) gesendet wird. Danach schaltet die Kommunikationssteuereinrichtung 11 am Ende der Arbitrationsphase 451, von den Bits der Arbitrationsphase 451 mit der Bitzeit T_B1 auf die kürzeren Bits der Datenphase 453 mit der Bitzeit T_B2 um, wie in Fig. 4 bis 7 gezeigt. Die Kommunikationssteuereinrichtung 11 signalisiert der Sende-/Empfangseinrichtung 12 in der Umschaltphase 452 mit Hilfe des Signals RxD_TC, das in Fig. 7 gezeigt ist und eine Pulszeitdauer T_B3 hat, dass die Sende-/Empfangseinrichtung ihre Betriebsart umschalten muss. Bei dem Beispiel von Fig. 7 ist die Pulszeitdauer T_B3 kürzer als die Bitzeit T_B2. Alternativ ist die Pulszeitdauer T_B3länger als die Bitzeit T_B2. Die Pulszeitdauer T_B3 ist kleiner oder kürzer als die Bitzeit T_B1. Nach dem AL1-Bit folgen Bits DH1, DL1 der Datenphase 453 und anschließend die Nutzdaten.

Gemäß Fig. 7 sieht somit die Sende-/Empfangseinrichtung 12 der Teilnehmerstation 10 ein Empfangssignal RxD_T, das in dem AL1-Bit, abweichend von dem zuvor beschriebenen Verlauf des TxD_T-Signals von Fig. 6, einen High-Pulse AH_1 aufweist. Mit anderen Worten, die Kommunikationssteuereinrichtung 11 sendet über den RxD-Anschluss einen High-Puls AH_1 (mit dicker Linie gezeichnet) mit Hilfe der Signale S1 und S2 in Fig. 3. Der High-Puls AH_1 wird während dem AL1-Bit gesendet und entspricht dem ersten binären Signalzustand. Die Kommunikationssteuereinrichtung 11 überschreibt das Signal RxD somit nur kurzzeitig.

Da das AL1-Bit des TxD_T-Signals von Fig. 6 den Zustand Low (zweiter binärer Signalzustand) hat, signalisieren die Signale RxD_T, TxD_T der Sende-/Empfangseinrichtung 12 in dem AL1-Bit, dass die Sende-/Empfangseinrichtung 12 von ihrer ersten Betriebsart (Z_SL) in ihre dritte Betriebsart (Z_F_TX) umzuschalten ist. Damit kann die Sende-/Empfangseinrichtung 12 aus den folgenden Bits des Sendesignal TxD die Bussignale CAN_H, CAN_L erzeugen. Das Signal RxD_TC bewirkt bei dem Beispiel von Fig. 4 bis Fig. 7 die Umschaltung der Betriebsart Z_SL der Sende-/Empfangseinrichtung 12 mit dem Umschaltblock 15 an der fallenden Flanke des Pulses AH_1. Die Signalisierung mit dem Signal S_OP an das Sendemodul 121 in Fig. 3 erfolgt jedoch erst ab dem nächsten Flankenwechsel im Signal TxD_T. Somit sendet das Sendemodul 121 mit den neuen Signalpegeln, also den Signalpegeln der Betriebsart der Datenphase 453, erst ab dem Beginn der Datenphase 453. In der dritten Betriebsart Z_F_TX agiert die Teilnehmerstation 10 als Sender und als Empfänger der Nachricht 45 bzw. des Rahmens 450, wie auch aus Fig. 6 und Fig. 7 ersichtlich.

Fig. 8 zeigt, dass das Sendemodul der Teilnehmerstation 30 am Ende der Arbitrationsphase 451 ein Sendesignal TxD_R mit dem Zustand High (erster binärer Signalzustand) sendet, da die Sende-/Empfangseinrichtung 32 der Teilnehmerstation 30 nur Empfänger des Signals von Fig. 6 bzw. der daraus resultierenden Signale von Fig. 4 und Fig. 5 ist. Zudem sieht die Sende-/Empfangseinrichtung 32 der Teilnehmerstation 30 ein Empfangssignal RxD_R gemäß Fig. 10, das in dem AL1-Bit, abweichend von dem zuvor beschriebenen Verlauf des TxD_T-Signals von Fig. 6, einen High-Puls AH_1 aufweist. Mit anderen Worten, die Kommunikationssteuereinrichtung 31 sendet über ihren RxD-Anschluss einen High-Puls AH_1 (mit dicker Linie gezeichnet) mit Hilfe der Signale S1 und S2 in Fig. 3. Die Kommunikationssteuereinrichtung 11 überschreibt das Signal RxD somit nur kurzzeitig.

Der High-Puls AH_1 wird wie bei der Teilnehmerstation 10 während dem AL1-Bit gesendet und entspricht dem ersten binären Signalzustand. Da das AL1-Bit des TxD_R-Signals von Fig. 8 den Zustand High (erster binärer Signalzustand) hat, signalisieren die Signale RxD_R, TxD_R der Sende-/Empfangseinrichtung 32 in dem AL1-Bit, dass die Sende-/Empfangseinrichtung 12 von ihrer ersten Betriebsart in ihre zweite Betriebsart (Z_F_RX) umzuschalten ist. Das Signal RxD_TC bewirkt die Umschaltung der Betriebsart der Sende-/Empfangseinrichtung 12 mit dem Umschaltblock 15 an der fallenden Flanke des Pulses AH_1. In der zweiten Betriebsart agiert die Teilnehmerstation 30 nur als Empfänger des Rahmens 450, das heißt die Teilnehmerstation 30 hat die vorangehende Arbitration verloren oder derzeit keine Nachricht 45 zu senden.

Die Signalisierung von der Kommunikationssteuereinrichtung 11, 31 an die Sende-/Empfangseinrichtung 12, 32 kann somit derart erfolgen, dass die Kombination der Signale TxD, RxD in dem Bit AL1 mit nur einem Puls AH_1, jedoch abhängig von dem Wert des Signals an dem TXD-Anschluss der Sende-/Empfangseinrichtung 12, 32 anzeigt, in welche Betriebsart die Sende-/Empfangseinrichtung 12, 32 in der Datenphase 453 zu schalten ist. Danach kann die Übertragung der Daten des Datenfelds 453 eines Rahmens 450 ausgeführt werden.

Das Empfangsmodul 122 schaltet seine Empfangsschwelle T_a der Arbitrationsphase 451 auf die Empfangsschelle T_d der Datenphase 453 sofort. Das gilt für die Sende-/Empfangseinrichtungen 32, 12. Ist die Sende-/Empfangseinrichtung 12 in die dritte Betriebsart zu schalten, also wenn die Sende-/Empfangseinrichtung 12 als Sender des Rahmens 450 agiert, kann die Sende-/Empfangseinrichtung 12 insbesondere erst bei der nächsten Flanke des Sendesignals TxD_T in die zweite Betriebsart schalten.

Ein Umschalten der Betriebsart bei der nächsten Flanke des Sendesignals TxD bzw. des Signals S_SW hat den Vorteil, dass jedem Bit eine Differenzspannung VDIFF am Bus 40 zugeordnet wird, da die Umschaltung der Betriebsart bzw. der Zustände in der Sende-/Empfangseinrichtung 12, 32 an der Bit-Grenze, also an der nächsten Flanke, erfolgt. Grund dafür ist, dass das AL1-Bit ein dominantes Bit ist und somit mit VDIFF=+2V kodiert ist. Das kurze Bit, das auf das AL1-Bit folgt, wird schon in der zweiten Betriebsart (Z_F_TX) gesendet und wird auf dem Bus als VDIFF=-1V kodiert.

Wird dagegen die Umschaltung in der Sende-/Empfangseinrichtung 12, 32 sofort vollzogen, also während des AL1 Bit, hat dies zur Folge, dass sich die Differenzspannung VDIFF während des AL1-Bits ändert und somit manche Empfangsknoten unter Umständen zusätzliche Flanken detektieren könnten. Da dadurch die Synchronisation der Teilnehmerstationen 10, 20, 30 gestört wird, ist dies eher nachteilig.

Für den Übergang von der Datenphase 453 zu der Rahmenendphase 455gilt Folgendes. Auch hier signalisiert die Kommunikationssteuereinrichtung 12, 32 ihrer zugehörigen Sende-/Empfangseinrichtung 12, 32, die Betriebsart der Sende-/Empfangseinrichtung 12, 32 umzuschalten, wobei die Signalisierung ebenfalls mit Hilfe von ein oder mehreren Pulsen über das RxD Signal erfolgt. Hier ist die Auswertung der Sendesignale TxD_T, TxD_R nicht notwendig, da die Sende-/Empfangseinrichtung 12, 32 immer in die erste Betriebsart zurückzuschalten sind, unabhängig in welcher Betriebsart die jeweilige Sende-/Empfangseinrichtung 12, 32 ist. Zudem kann die Sende-/Empfangseinrichtung 12, 32 das Umschalten verzögern, bis die Sende-/Empfangseinrichtung 12, 32 eine Bitgrenze erkennt. Die Sende-/Empfangseinrichtung 12 im Sender erkennt die Bitgrenze an einer Flanke auf dem TxD-Eingangs-Pin. Die Sende-/Empfangseinrichtung 12, 32 im Empfänger, der kein Sender des Rahmens 450 ist, erkennt die Bitgrenze an einer Flanke
auf dem CAN-Bus 40.

Für den Fall, dass die Signalisierung von der Kommunikationssteuereinrichtung 11, 31 an die zugehörige Sende-/Empfangseinrichtung 12, 32 gestört wird, erkennt der Umschaltblock 15, 35 die zuvor genannte Umschaltbedingung nicht. Um trotzdem weiter an der Kommunikation teilnehmen zu können, verwendet der Umschaltblock 15 zusätzlich einen vorbestimmten Zeitablauf (Time Out) als Umschaltbedingung. Ist die Sende-/Empfangseinrichtung 12, 32 in der Betriebsart Z_F_TXund erfolgt für eine voreingestellte Zeitdauer T0 kein Flankenwechsel am Anschluss oder Signal TxD, so schaltet der Umschaltblock 15, 25 die Sende-/Empfangseinrichtung 12, 32 in die erste Betriebsart Z_SL. Ist die Sende-/Empfangseinrichtung 12, 32 in der Betriebsart Z_F_RX und erfolgt für eine voreingestellte Zeitdauer T0 kein Flankenwechsel an dem Signal S_SW, so schaltet der Umschaltblock 15, 25 die Sende-/Empfangseinrichtung 12, 32 in die erste Betriebsart Z_SL.

Durch die zuvor beschriebene Ausgestaltung der Teilnehmerstation 10 ist keine galvanische Verbindung durch jeweils einen zusätzlichen Anschluss an der Kommunikationssteuereinrichtung 11 und der damit verbundenen Sende-/Empfangseinrichtung 12 erforderlich, damit die Kommunikationssteuereinrichtung 11 den Zeitpunkt der Betriebsartumschaltung übertragen kann. Das heißt, der Block 15 benötigt vorteilhaft keinen zusätzlichen Anschluss, der an einem Standardgehäuse der Sende-/Empfangseinrichtung 12 nicht verfügbar ist. Somit ist durch den Block 15 kein Wechsel auf ein anderes größeres und kostenintensives Gehäuse notwendig, um einen zusätzlichen Anschluss bereitzustellen.

Außerdem ermöglicht der Betriebsart-Umschaltbock 15, dass die Sende-/Empfangseinrichtung 12 keine Protokollkontroller-Funktionalität benötigt. Ein solcher Protokollkontroller könnte unter anderem die Umschaltphase 452 der Nachricht 45 erkennen und abhängig davon die Datenphase 453 einleiten. Da ein solcher zusätzlicher Protokollkontroller jedoch beachtlich Fläche in der Sende-/Empfangseinrichtung 12 oder dem ASIC benötigen würde, bewirkt der Betriebsart-Umschaltbock 15 eine deutliche Senkung des Ressourcenbedarfs.

Dadurch bietet die Verschaltung des Betriebsart-Umschaltbocks 15 mit einer üblichen Sende-/Empfangseinrichtung eine sehr unaufwändige und kostengünstige Lösung, um der Sende-/Empfangseinrichtung 12 kenntlich zu machen, dass eine Umschaltung und welche Umschaltung zwischen ihren verschiedenen Betriebsarten vorzunehmen ist, nämlich insbesondere von der ersten Betriebsart in die zweite Betriebsart oder von der ersten Betriebsart in die dritte Betriebsart oder von der zweiten Betriebsart in die erste Betriebsart oder eine sonstige Umschaltung von Betriebsarten.

Durch die beschriebene Ausgestaltung der Sende-/Empfangseinrichtung(en) 12, 32 können in der Datenphase 452 weit höhere Datenraten als mit CAN oder CAN-FD erreicht werden. Zudem kann die Datenlänge in dem Datenfeld der Datenphase 453 beliebig gewählt werden, wie zuvor beschrieben. Dadurch können die Vorteile von CAN in Bezug auf die Arbitrierung beibehalten und dennoch eine größere Anzahl von Daten in kürzerer Zeit als bisher sehr sicher und damit effektiv übertragen werden, das heißt, ohne dass eine Wiederholung der Daten aufgrund eines Fehlers notwendig wäre, wie nachfolgend erläutert.

Ein weiterer Vorteil besteht darin, dass Fehlerrahmen in dem Bussystem 1 bei der Übertragung von Nachrichten 45 nicht benötigt werden, jedoch optional verwendet werden können. Werden keine Fehlerrahmen verwendet, werden Nachrichten 45 nicht mehr zerstört, was eine Ursache für die Notwendigkeit einer Doppelübertragung von Nachrichten beseitigt. Dadurch steigt die Nettodatenrate.

Ist das Bussystem kein CAN Bussystem, kann der Betriebsart-Umschaltblock 15, 35 ausgelegt werden oder sein, auf andere Umschaltsignale zu reagieren. In diesem Fall kann der Betriebsart-Umschaltblock 15, 35 abhängig von einem Ergebnis seiner Auswertung das Sendemodul 121 und/oder das Empfangsmodul 122 in eine von mindestens zwei verschiedenen Betriebsarten schalten und mindestens eine der Betriebsarten nach Ablauf einer bei dem Betriebsart-Umschaltblock 15, 35 voreingestellten Zeitdauer T0 in eine andere der Betriebsarten umschalten.

Gemäß einem zweiten Ausführungsbeispiel hat das Betriebsart-Umschaltsignal RxD_TC mindestens einen Puls mit einer Pulszeitdauer T_B3, die in etwa gleich der zweiten Bitzeit T_B2 ist oder kürzer als die zweite Bitzeit T_B2 ist. Auch auf diese Weise kann eine sehr schnelle jedoch sehr sichere und damit robuste Signalisierung der Umschaltung vorgenommen werden.

Ansonsten ist das Bussystem 1 bei dem zweiten Ausführungsbeispiel auf die gleiche Weise aufgebaut, wie zuvor in Bezug auf das erste Ausführungsbeispiel beschrieben.

Alle zuvor beschriebenen Ausgestaltungen der Blöcke 15, 35, der Teilnehmerstationen 10, 20, 30, des Bussystems 1 und des darin ausgeführten Verfahrens können einzeln oder in allen möglichen Kombinationen Verwendung finden. Insbesondere können alle Merkmale der zuvor beschriebenen Ausführungsbeispiele und/oder deren Modifikationen beliebig kombiniert werden. Zusätzlich oder alternativ sind insbesondere folgende Modifikationen denkbar.

Auch wenn die Erfindung zuvor am Beispiel des CAN-Bussystems beschrieben ist, kann die Erfindung bei jedem Kommunikationsnetzwerk und/oder Kommunikationsverfahren eingesetzt werden, bei welchem zwei verschiedene Kommunikationsphasen verwendet werden, in denen sich die Buszustände unterscheiden, die für die unterschiedlichen Kommunikationsphasen erzeugt werden. Insbesondere ist die Erfindung bei Entwicklungen von sonstigen seriellen Kommunikationsnetzwerken, wie Ethernet und/oder 10 Base-T1S Ethernet, Feldbussystemen, usw. einsetzbar.

Das zuvor beschriebene Bussystem 1 gemäß den Ausführungsbeispielen ist anhand eines auf dem CAN-Protokoll basierenden Bussystems beschrieben. Das Bussystem 1 gemäß den Ausführungsbeispielen kann jedoch auch eine andere Art von Kommunikationsnetz sein, bei welchem Daten seriell mit zwei verschiedenen Bitraten übertragbar sind. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf einen gemeinsamen Kanal gewährleistet ist.

Die Anzahl und Anordnung der Teilnehmerstationen 10, 20, 30 in dem Bussystem 1 der Ausführungsbeispiele ist beliebig. Insbesondere kann die Teilnehmerstation 20 in dem Bussystem 1 entfallen. Es ist möglich, dass eine oder mehrere der Teilnehmerstationen 10 oder 30 in dem Bussystem 1 vorhanden sind. Denkbar ist, dass alle Teilnehmerstationen in dem Bussystem 1 gleich ausgestaltet sind, also nur Teilnehmerstation 10 oder nur Teilnehmerstation 30 vorhanden sind.

## Patentansprüche

1. Sende-/Empfangseinrichtung (12; 32) für eine Teilnehmerstation (10; 30) eines seriellen Bussystems (1), mit
einem ersten Anschluss zum Empfang eines Sendesignals (TxD; TxD_T; TxD_R) von einer Kommunikationssteuereinrichtung (11; 31),
einem Sendemodul (121) zum Umsetzen des Sendesignals (TxD; TxD_T; TxD_R) in Signale (CAN_H, CAN_L) für Busadern (41, 42) eines Busses (40) des Bussystems (1) und zum Senden der Signale (CAN_H, CAN_L) auf den Bus (40), bei welchem Bussystem (1) zum Austausch von Nachrichten (45; 46) zwischen Teilnehmerstationen (10, 20, 30) des Bussystems (1) mindestens eine erste Kommunikationsphase (451, 452, 454, 455) und eine zweite Kommunikationsphase (453) verwendet werden, wobei die Sende-/Empfangseinrichtung (12; 32) für die erste Kommunikationsphase (451, 452, 454, 455) in eine erste Betriebsart (Z_SL) zu schalten ist, für die zweite Kommunikationsphase (453) von der ersten Betriebsart (Z_SL) in eine zweite oder dritte Betriebsart (Z_F_RX, Z_F_TX) zu schalten ist, und am Ende der zweiten Kommunikationsphase (453) von sowohl der zweiten als auch der dritten Betriebsart (Z_F_RX, Z_F_TX) in die erste Betriebsart (Z_SL) zu schalten ist, einem Empfangsmodul (122) zum Empfang eines Signals (VDIFF) von dem Bus (40), und wobei das Empfangsmodul (122) ausgestaltet ist, aus dem von dem Bus (40) empfangenen Signal (VDIFF) ein Signal (S_SW) zu erzeugen und dieses als digitales Empfangssignal (RxD) an die Kommunikationssteuereinrichtung (11; 31) weiterzugeben,
einem zweiten Anschluss zum Senden des digitalen Empfangssignals (RxD) an die Kommunikationssteuereinrichtung (11; 31) und zum Empfang eines Betriebsart-Umschaltsignals (RxD_TC) von der Kommunikationssteuereinrichtung (11; 31), das mindestens einen Puls (AH_1) zur Signalisierung eines Umschaltens der Betriebsart der Sende-/Empfangseinrichtung (12; 32) hat, so dass die Sende-/Empfangseinrichtung (12; 32) an dem zweiten Anschluss ein Empfangssignal (RxD_T, RxD_R) sieht, das in einem Bit (AL1) abweichend von dem Sendesignal (TxD_T; TxD_R) den mindestens einen Puls (AH_1) aufweist, und
einem Betriebsart-Umschaltblock (15; 35) zur Auswertung des an dem zweiten Anschluss von der Kommunikationssteuereinrichtung (11; 31) empfangenen Betriebsart-Umschaltsignals (RxD_TC),
wobei der Betriebsart-Umschaltblock (15; 35) ausgestaltet ist, Empfangsschwellen (T_a; T_d) des Empfangsmoduls (122) abhängig von einem Ergebnis der Auswertung des Betriebsart-Umschaltsignals (RxD_TC), des von dem Bus (40) empfangenen Signals (S_SW) und des Sendesignals (TxD; TxD_T; TxD_R) zu schalten, um die Sende-/Empfangseinrichtung (12; 32) in die zweite Betriebsart (Z_F_RX) zu schalten, und
wobei der Betriebsart-Umschaltblock (15; 35) ausgestaltet ist, das Sendemodul (121) und Empfangsschwellen (T_a; T_d) des Empfangsmoduls (122) abhängig von einem Ergebnis der Auswertung des Betriebsart-Umschaltsignals (RxD_TC), des von dem Bus (40) empfangenen Signals (S_SW) und des Sendesignals (TxD; TxD_T; TxD_R) zu schalten, um die Sende-/Empfangseinrichtung (12; 32) von der ersten Betriebsart (Z_SL) in die dritte Betriebsart (Z_F_TX) zu schalten.

2. Sende-/Empfangseinrichtung (12; 32) nach Anspruch 1,
wobei das an dem zweiten Anschluss empfangene Betriebsart-Umschaltsignal (RxD_TC) ein Puls (AH_1) mit einem Wert ist, der invers zu einem Wert des digitalen Empfangssignals (RxD; RxD_T; RxD_R) ist,
wobei der Betriebsart-Umschaltblock (15; 35) ausgestaltet ist, die Empfangsschwellen (T_a; T_d) des Empfangsmoduls (122) zu schalten, um die Sende-/Empfangseinrichtung (12; 32) von der ersten Betriebsart (Z_SL) in die zweite Betriebsart (Z_F_RX) zu schalten, wenn das Umschaltsignal (RxD_TC) den Puls (AH_1) aufweist und der Wert des Sendesignals (TxD_R) dem Wert des Pulses (AH_1) entspricht, und
wobei der Betriebsart-Umschaltblock (15; 35) ausgestaltet ist, das Sendemodul (121) und die Empfangsschwellen (T_a; T_d) des Empfangsmoduls (122) zu schalten, um die Sende-/Empfangseinrichtung (12; 32) von der ersten Betriebsart (Z_SL) in die dritte Betriebsart (Z_F_TX) zu schalten, wenn das Umschaltsignal (RxD_TC) den Puls (AH_1) aufweist und der Wert des Sendesignals (TxD_T) invers zu dem Wert des Pulses (AH_1) ist.

3. Sende-/Empfangseinrichtung (12; 32) nach Anspruch 2,
wobei die Sende-/Empfangseinrichtung (12; 32) in der zweiten Betriebsart (Z_F_RX) nicht der Sender der Nachricht (45) in der zweiten Kommunikationsphase (453) ist, und
wobei die Sende-/Empfangseinrichtung (12; 32) in der dritten Betriebsart (Z_F_TX) Sender der Nachricht (45) in der zweiten Kommunikationsphase (453) ist.

4. Sende-/Empfangseinrichtung (12; 32) nach einem der vorangehenden Ansprüche, wobei der Betriebsart-Umschaltblock (15; 35) ausgestaltet ist, zumindest bei der Umschaltung von der zweiten Kommunikationsphase (453) in die erste Kommunikationsphase (454, 455, 451, 452) die Umschaltung der Betriebsart vorzunehmen, wenn in dem von dem Empfangsmodul (122) ausgegebenen Empfangssignal (S_SW) eine Flanke zwischen verschiedenen Buszuständen auftritt und die Sende-/Empfangseinrichtung (12; 32) nicht der Sender der Nachricht (45) ist.

5. Sende-/Empfangseinrichtung (12; 32) nach einem der vorangehenden Ansprüche, wobei der Betriebsart-Umschaltblock (15; 35) ausgestaltet ist, das Sendemodul (121) in einer Betriebsart der zweiten Kommunikationsphase (453) abzuschalten, in welcher die Sende-/Empfangseinrichtung (12; 32) nicht der Sender der Nachricht (45) ist.

6. Sende-/Empfangseinrichtung (12; 32) nach einem der Ansprüche 1 bis 4, wobei der Betriebsart-Umschaltblock (15; 35) ausgestaltet ist, zumindest bei der Umschaltung von der ersten Kommunikationsphase (454, 455, 451, 452) in die zweite Kommunikationsphase (453) die Umschaltung der Betriebsart vorzunehmen, wenn die Sende-/Empfangseinrichtung (12; 32) in der zweiten Kommunikationsphase (453) Sender der Nachricht (45) ist und in dem Sendesignal (TxD; TxD_T) eine Flanke zwischen verschiedenen Buszuständen auftritt.

7. Sende-/Empfangseinrichtung (12; 32) nach einem der vorangehenden Ansprüche,
wobei der Betriebsart-Umschaltblock (15; 35) ausgestaltet ist, das Sendemodul (121) abhängig von einem Ergebnis der Auswertung des Betriebsart-Umschaltsignals (RxD_TC), des von dem Bus (40) empfangenen Signals (S_SW) und des Sendesignals (TxD; TxD_T; TxD_R) auszuschalten, um die Sende-/Empfangseinrichtung (12; 32) in die zweite Betriebsart (Z_F_RX; Z_F_TX) zu schalten, und/oder
wobei der Betriebsart-Umschaltblock (15; 35) ausgestaltet ist, das Sendemodul (121) und Empfangsschwellen (T_a; T_d) des Empfangsmoduls (122) abhängig von einem Ergebnis der Auswertung des Betriebsart-Umschaltsignals (RxD_TC) und des von dem Bus (40) empfangenen Signals (S_SW) zu schalten, um die Sende-/Empfangseinrichtung (12; 32) am Ende der zweiten Kommunikationsphase (453) in die erste Betriebsart (Z_SL) zu schalten.

8. Sende-/Empfangseinrichtung (12; 32) nach einem der vorangehenden Ansprüche, wobei das Sendemodul (121) ausgestaltet ist, in der ersten Kommunikationsphase (451, 452, 454, 455) Bits der Signale auf den Bus (40) mit einer ersten Bitzeit (T_B1) zu treiben, die um mindestens den Faktor 10 größer als eine zweite Bitzeit (T_B2) von Bits ist, die das Sendemodul (121) in der zweiten Kommunikationsphase (453) auf den Bus (40) treibt.

9. Sende-/Empfangseinrichtung (12; 32) nach Anspruch 8,
wobei das Betriebsart-Umschaltsignal (RxD_TC) über den zweiten Anschluss zur Signalisierung, dass eine Umschaltung der Betriebsart vorzunehmen ist, einen Puls mit einer Pulszeitdauer (T_B3) hat, die kleiner als die erste Bitzeit (T_B1) ist und größer als die zweite Bitzeit (T_B2) ist, oder
wobei das Betriebsart-Umschaltsignal (RxD_TC) über den zweiten Anschluss mindestens einen Puls mit einer Pulszeitdauer (T_B3) hat, die in etwa gleich der zweiten Bitzeit (T_B2) ist oder kleiner als die zweite Bitzeit (T_B2) ist.

10. Sende-/Empfangseinrichtung (12; 32) nach einem der vorangehenden Ansprüche, wobei das in der ersten Kommunikationsphase (451, 452, 454, 455) von dem Bus (40) empfangene Signal (S_SW) mit einem anderen Physical Layer erzeugt ist als das in der zweiten Kommunikationsphase (453) von dem Bus (40) empfangene Signal (S_SW).

11. Kommunikationssteuereinrichtung (11; 31) für eine Teilnehmerstation (10; 30) eines seriellen Bussystems (1), mit
einem Kommunikationssteuermodul (111) zum Erzeugen eines Sendesignals (TxD; TxD_T; TxD_R) zum Steuern einer Kommunikation der Teilnehmerstation (10; 30) mit mindestens einer anderen Teilnehmerstation (10; 20; 30) des Bussystems (1), bei welchem Bussystem (1) zum Austausch von Nachrichten (45; 46) zwischen Teilnehmerstationen (10, 20, 30) des Bussystems (1) mindestens eine erste Kommunikationsphase (451, 452, 454) und eine zweite Kommunikationsphase (453) verwendet werden,
einem ersten Anschluss zum Senden des Sendesignals (TxD; TxD_T; TxD_R) an eine Sende-/Empfangseinrichtung (12; 32), die zum Senden des Sendesignals (TxD) auf einen Bus (40) des Bussystems (1) derart ausgestaltet ist, dass die Sende-/Empfangseinrichtung (12; 32) für die erste Kommunikationsphase (451, 452, 454, 455) in eine erste Betriebsart (Z_SL) zu schalten ist und für die zweite Kommunikationsphase (453) in eine zweite oder dritte Betriebsart (Z_F_RX, Z_F_TX) zu schalten ist,
einem zweiten Anschluss zum Empfangen eines digitalen Empfangssignals (RxD; RxD_T; RxD_R) von der Sende-/Empfangseinrichtung (12; 32),
wobei die Kommunikationssteuereinrichtung (11; 31) zum Erzeugen eines Betriebsart-Umschaltsignals (RxD_TC) ausgestaltet ist, das mindestens einen Puls (AH_1) zur Signalisierung eines Umschaltens der Betriebsart der Sende-/Empfangseinrichtung (12; 32) hat und welches der Sende-/Empfangseinrichtung (12; 32) anzeigt, dass von der derzeitigen Betriebsart in eine andere Betriebsart der ersten bis dritten Betriebsart zu schalten ist, und welches eine interne Kommunikation zwischen dem Kommunikationssteuermodul (111) und der Sende-/Empfangseinrichtung (12; 32) realisiert, und
wobei das Kommunikationssteuermodul (111) ausgestaltet ist, das Betriebsart-Umschaltsignal (RxD_TC) über den zweiten Anschluss an die Sende-/Empfangseinrichtung (12; 32) zu senden und für ein Umschalten der Sende-/Empfangseinrichtung (12; 32) von der ersten Betriebsart (Z_SL) in die zweite oder dritte Betriebsart (Z_F_RX, Z_F_TX) gleichzeitig mit dem an dem ersten Anschluss gesendeten Sendesignal (TxD; TxD_T; TxD_R) der Sende-/Empfangseinrichtung (12; 32) zu signalisieren, in welche der Betriebsarten (Z_F_RX, Z_F_TX) die Sende-/Empfangseinrichtung (12; 32) zu schalten ist.

12. Kommunikationssteuereinrichtung (11; 31) nach Anspruch 11,
wobei das Betriebsart-Umschaltsignal (RxD_TC) über den zweiten Anschluss zur Signalisierung, dass eine Umschaltung der Betriebsart der Sende-/Empfangseinrichtung (12; 32) vorzunehmen ist, einen Puls mit einer Pulszeitdauer (T_B3) hat, die kleiner als eine erste Bitzeit (T_B1) ist, mit welcher Bits der Signale in der ersten Kommunikationsphase (451) auf den Bus (40) getrieben werden, und größer als die zweite Bitzeit (T_B2) ist, mit welcher Bits der Signale in der zweiten Kommunikationsphase (453) auf den Bus (40) getrieben werden, oder
wobei das Betriebsart-Umschaltsignal (RxD_TC) über den zweiten Anschluss mindestens einen Puls mit einer Pulszeitdauer (T_B3) hat, die in etwa gleich der zweiten Bitzeit (T_B2) ist oder kleiner als die zweite Bitzeit (T_B2) ist.

13. Kommunikationssteuereinrichtung (11; 31) nach Anspruch **11** oder 12, wobei in der ersten Kommunikationsphase (451, 452, 454, 455) ausgehandelt wird, welche der Teilnehmerstationen (10, 20, 30) des Bussystems (1) in der nachfolgenden zweiten Kommunikationsphase (453) einen zumindest zeitweise exklusiven, kollisionsfreien Zugriff auf den Bus (40) bekommt.

14. Bussystem (1), mit
einem Bus (40), und
mindestens zwei Teilnehmerstationen (10; 20; 30), welche über den Bus (40) derart miteinander verbunden sind, dass sie seriell miteinander kommunizieren können und von denen mindestens eine Teilnehmerstation (10; 30) eine Sende-/Empfangseinrichtung (12; 32) nach einem der Ansprüche 1 bis 10 sowie eine Kommunikationssteuereinrichtung (11; 31) nach einem der Ansprüche 11 bis 13 aufweist.

15. Verfahren zur Kommunikation in einem seriellen Bussystem (1), wobei das Verfahren mit einer Sende-/Empfangseinrichtung für eine Teilnehmerstation (10; 30) eines Bussystems (1) ausgeführt wird, bei welchem zum Austausch von Nachrichten (45; 46) zwischen Teilnehmerstationen (10, 20, 30) des Bussystems (1) mindestens eine erste Kommunikationsphase (451, 452, 454, 455) und eine zweite Kommunikationsphase (453) verwendet werden, wobei die Sende-/Empfangseinrichtung (12; 32) für die erste Kommunikationsphase (451, 452, 454, 455) in eine erste Betriebsart (Z_SL) zu schalten ist, für die zweite Kommunikationsphase (453) von der ersten Betriebsart (Z_SL) in eine zweite oder dritte Betriebsart (Z_F_RX, Z_F_TX) zu schalten ist, und am Ende der zweiten Kommunikationsphase (453) von sowohl der zweiten als auch der dritten Betriebsart (Z_F_RX, Z_F_TX) in die erste Betriebsart (Z_SL) zu schalten ist, wobei die Teilnehmerstation (10; 30) ein Sendemodul (121), ein Empfangsmodul (122), einen Betriebsart-Umschaltblock (15; 35), einen ersten Anschluss zum Empfang eines Sendesignals (TxD; TxD_T; TxD_R) von der Kommunikationssteuereinrichtung (11; 31), und einen zweiten Anschluss aufweist, und wobei das Verfahren die Schritte aufweist,
Empfangen, mit dem Empfangsmodul (122), eines Signals (VDIFF) von dem Bus (40) des Bussystems (1),
Erzeugen, mit dem Empfangsmodul (122), aus dem von dem Bus (40) empfangenen Signal (VDIFF) eines Signals (S_SW) und Ausgeben des Signals (S_SW) als digitales Empfangssignal (RxD) an dem zweiten Anschluss,
Auswerten, mit dem Betriebsart-Umschaltblock (15; 35), eines an dem zweiten Anschluss von der Kommunikationssteuereinrichtung (11; 31) empfangenen Betriebsart-Umschaltsignals (RxD_TC), das mindestens einen Puls (AH_1) zur Signalisierung eines Umschaltens der Betriebsart der Sende-/Empfangseinrichtung (12; 32) hat,
Schalten, am Ende der ersten Kommunikationsphase (454, 455, 451, 452) mit dem Betriebsart-Umschaltblock (15; 35), von Empfangsschwellen (T_a; T_d) des Empfangsmoduls (122) abhängig von einem Ergebnis der Auswertung des Betriebsart-Umschaltsignals (RxD_TC), des von dem Bus (40) empfangenen Signals (S_SW) und des an dem ersten Anschluss empfangenen Sendesignals (TxD; TxD_T; TxD_R), um die Sende-/Empfangseinrichtung (12; 32) von der ersten Betriebsart (Z_SL) in die zweite Betriebsart (Z_F_RX) zu schalten, oder
Schalten, am Ende der ersten Kommunikationsphase (454, 455, 451, 452) mit dem Betriebsart-Umschaltblock (15; 35), des Sendemoduls (121) und von Empfangsschwellen (T_a; T_d) des Empfangsmoduls (122) abhängig von einem Ergebnis der Auswertung des Betriebsart-Umschaltsignals (RxD_TC), des von dem Bus (40) empfangenen Signals (S_SW) und des Sendesignals (TxD; TxD_T; TxD_R), um die Sende-/Empfangseinrichtung (12; 32) in die dritte Betriebsart (Z_F_TX) zu schalten.

## Claims

1. Transmitting/receiving device (12; 32) for a subscriber station (10; 30) of a serial bus system (1), having
a first connection for receiving a transmission signal (TxD; TxD_T; TxD_R) from a communication control device (11; 31),
a transmitting module (121) for converting the transmission signal (TxD; TxD_T; TxD_R) into signals (CAN_H, CAN_L) for bus wires (41, 42) of a bus (40) of the bus system (1) and for sending the signals (CAN_H, CAN_L) to the bus (40), in which bus system (1) at least a first communication phase (451, 452, 454, 455) and a second communication phase (453) are used for exchanging messages (45; 46) between subscriber stations (10, 20, 30) of the bus system (1), the transmitting/receiving device (12; 32) needing to be switched to a first mode (Z_SL) for the first communication phase (451, 452, 454, 455), needing to be switched from the first mode (Z_SL) to a second or third mode (Z_F_RX, Z_F_TX) for the second communication phase (453), and needing to be switched from both the second and third modes (Z_F_RX, Z_F_TX) to the first mode (Z_SL) at the end of the second communication phase (453), a receiving module (122) for receiving a signal (VDIFF) from the bus (40), and the receiving module (122) being designed to use the signal (VDIFF) received from the bus (40) to generate a signal (S_SW) and to forward the latter as a digital received signal (RxD) to the communication control device (11; 31),
a second connection for sending the digital received signal (RxD) to the communication control device (11; 31) and for receiving from the communication control device (11; 31) a mode changeover signal (RxD_TC) that has at least one pulse (AH_1) for signalling changeover of the mode of the transmitting/receiving device (12; 32), with the result that the transmitting/receiving device (12; 32) sees on the second connection a received signal (RxD_T, RxD_R) that, unlike the transmission signal (TxD_T; TxD_R), has the at least one pulse (AH_1) in a bit (AL1), and
a mode changeover block (15; 35) for evaluating the mode changeover signal (RxD_TC) received on the second connection from the communication control device (11; 31),
the mode changeover block (15; 35) being designed to switch reception thresholds (T_a; T_d) of the receiving module (122) on the basis of a result of the evaluation of the mode changeover signal (RxD_TC), of the signal (S_SW) received from the bus (40) and of the transmission signal (TxD; TxD_T; TxD_R) in order to switch the transmitting/receiving device (12; 32) to the second mode (Z_F_RX), and
the mode changeover block (15;35) being designed to switch the transmitting module (121) and reception thresholds (T_a; T_d) of the receiving module (122) on the basis of a result of the evaluation of the mode changeover signal (RxD_TC), of the signal (S_SW) received from the bus (40) and of the transmission signal (TxD; TxD_T; TxD_R) in order to switch the transmitting/receiving device (12; 32) from the first mode (Z_SL) to the third mode (Z_F_TX).

2. Transmitting/receiving device (12; 32) according to Claim 1,
the mode changeover signal (RxD_TC) received on the second connection being a pulse (AH_1) having a value that is the inverse of a value of the digital received signal (RxD; RxD_T; RxD_R),
the mode changeover block (15; 35) being designed to switch the reception thresholds (T_a; T_d) of the receiving module (122) in order to switch the transmitting/receiving device (12; 32) from the first mode (Z_SL) to the second mode (Z_F_RX) when the changeover signal (RxD_TC) has the pulse (AH_1) and the value of the transmission signal (TxD_R) corresponds to the value of the pulse (AH_1), and
the mode changeover block (15;35) being designed to switch the transmitting module (121) and the reception thresholds (T_a; T_d) of the receiving module (122) in order to switch the transmitting/receiving device (12; 32) from the first mode (Z_SL) to the third mode (Z_F_TX) when the changeover signal (RxD_TC) has the pulse (AH_1) and the value of the transmission signal (TxD_T) is the inverse of the value of the pulse (AH_1).

3. Transmitting/receiving device (12; 32) according to Claim 2,
the transmitting/receiving device (12; 32) not being the sender of the message (45) in the second communication phase (453) in the second mode (Z_F_RX), and
the transmitting/receiving device (12; 32) being the sender of the message (45) in the second communication phase (453) in the third mode (Z_F_TX).

4. Transmitting/receiving device (12; 32) according to one of the preceding claims, the mode changeover block (15; 35) being designed to perform the changeover of the mode, at least for the changeover from the second communication phase (453) to the first communication phase (454, 455, 451, 452), when an edge in the received signal (S_SW) that is output by the receiving module (122) occurs between different bus states and the transmitting/receiving device (12; 32) is not the sender of the message (45).

5. Transmitting/receiving device (12; 32) according to one of the preceding claims, the mode changeover block (15; 35) being designed to shut down the transmitting module (121) in a mode of the second communication phase (453) in which the transmitting/receiving device (12; 32) is not the sender of the message (45).

6. Transmitting/receiving device (12; 32) according to one of Claims 1 to 4, the mode changeover block (15; 35) being designed to perform the changeover of the mode, at least for the changeover from the first communication phase (454, 455, 451, 452) to the second communication phase (453), when the transmitting/receiving device (12; 32) is the sender of the message (45) in the second communication phase (453) and an edge in the transmission signal (TxD; TxD_T) occurs between different bus states.

7. Transmitting/receiving device (12; 32) according to one of the preceding claims,
the mode changeover block (15;35) being designed to switch off the transmitting module (121) on the basis of a result of the evaluation of the mode changeover signal (RxD_TC), of the signal (S_SW) received from the bus (40) and of the transmission signal (TxD; TxD_T; TxD_R) in order to switch the transmitting/receiving device (12; 32) to the second mode (Z_F_RX; Z_F_TX), and/or
the mode changeover block (15;35) being designed to switch the transmitting module (121) and reception thresholds (T_a; T_d) of the receiving module (122) on the basis of a result of the evaluation of the mode changeover signal (RxD_TC) and of the signal (S_SW) received from the bus (40) in order to switch the transmitting/receiving device (12; 32) to the first mode (Z_SL) at the end of the second communication phase (453).

8. Transmitting/receiving device (12; 32) according to one of the preceding claims, the transmitting module (121) being designed to drive bits of the signals onto the bus (40) with a first bit time (T_B1) in the first communication phase (451, 452, 454, 455), which first bit time is longer by at least a factor of 10 than a second bit time (T_B2) of bits that the transmitting module (121) drives onto the bus (40) in the second communication phase (453).

9. Transmitting/receiving device (12; 32) according to Claim 8,
the mode changeover signal (RxD_TC) via the second connection, for signalling that changeover of the mode needs to be performed, having a pulse with a pulse period (T_B3) that is shorter than the first bit time (T_B1) and is longer than the second bit time (T_B2), or
the mode changeover signal (RxD_TC) via the second connection having at least one pulse with a pulse period (T_B3) that is approximately equal to the second bit time (T_B2) or is shorter than the second bit time (T_B2).

10. Transmitting/receiving device (12; 32) according to one of the preceding claims, the signal (S_SW) received from the bus (40) in the first communication phase (451, 452, 454, 455) being generated by means of a different physical layer than the signal (S_SW) received from the bus (40) in the second communication phase (453).

11. Communication control device (11; 31) for a subscriber station (10; 30) of a serial bus system (1), having
a communication control module (111) for generating a transmission signal (TxD; TxD_T; TxD_R) for controlling communication between the subscriber station (10; 30) and at least one other subscriber station (10; 20; 30) of the bus system (1), in which bus system (1) at least a first communication phase (451, 452, 454) and a second communication phase (453) are used for exchanging messages (45; 46) between subscriber stations (10, 20, 30) of the bus system (1),
a first connection for sending the transmission signal (TxD; TxD_T; TxD_R) to a transmitting/receiving device (12; 32), which, to send the transmission signal (TxD) to a bus (40) of the bus system (1), is designed in such a way that the transmitting/receiving device (12; 32) needs to be switched to a first mode (Z_SL) for the first communication phase (451, 452, 454, 455) and needs to be switched to a second or third mode (Z_F_RX, Z_F_TX) for the second communication phase (453),
a second connection for receiving a digital received signal (RxD; RxD_T; RxD_R) from the transmitting/receiving device (12; 32),
the communication control device (11; 31) being designed to generate a mode changeover signal (RxD_TC) that has at least one pulse (AH_1) for signaling changeover of the mode of the transmitting/receiving device (12;32) and that indicates to the transmitting/receiving device (12; 32) that it is necessary to switch from the current mode to a different mode of the first to third modes, and that implements internal communication between the communication control module (111) and the transmitting/receiving device (12; 32), and
the communication control module (111) being designed to send the mode changeover signal (RxD_TC) to the transmitting/receiving device (12; 32) via the second connection and, in order to change over the transmitting/receiving device (12; 32) from the first mode (Z_SL) to the second or third mode (Z_F_RX, Z_F_TX), to signal to the transmitting/receiving device (32; 32), at the same time as the transmission signal (TxD; TxD_T; TxD_R) sent on the first connection, to which of the modes (Z_F_RX, Z_F_TX) the transmitting/receiving device (12; 12) needs to be switched.

12. Communication control device (11; 31) according to Claim 11,
the mode changeover signal (RxD_TC) via the second connection, for signalling that changeover of the mode of the transmitting/receiving device (12; 32) needs to be performed, having a pulse with a pulse period (T_B3) that is shorter than a first bit time (T_B1) with which bits of the signals are driven onto the bus (40) in the first communication phase (451) and longer than the second bit time (T_B2), with which bits of the signals are driven onto the bus (40) in the second communication phase (453), or
the mode changeover signal (RxD_TC) via the second connection having at least one pulse with a pulse period (T_B3) that is approximately equal to the second bit time (T_B2) or is shorter than the second bit time (T_B2).

13. Communication control device (11; 31) according to Claim 11 or 12, the first communication phase (451, 452, 454, 455) involving negotiating which of the subscriber stations (10, 20, 30) of the bus system (1) receives at least temporarily exclusive, collision-free access to the bus (40) in the subsequent second communication phase (453).

14. Bus system (1) having
a bus (40), and
at least two subscriber stations (10; 20;30) connected to one another via the bus (40) in such a way that they can communicate serially with one another and at least one subscriber station (10; 30) of which has a transmitting/receiving device (12; 32) according to one of Claims 1 to 10 and a communication control device (11; 31) according to one of Claims 11 to 13.

15. Method for communication in a serial bus system (1), the method being carried out by means of a transmitting/receiving device for a subscriber station (10; 30) of a bus system (1) in which at least a first communication phase (451, 452, 454, 455) and a second communication phase (453) are used for exchanging messages (45; 46) between subscriber stations (10, 20, 30) of the bus system (1), the transmitting/receiving device (12; 32) needing to be switched to a first mode (Z_SL) for the first communication phase (451, 452, 454, 455), needing to be switched from the first mode (Z_SL) to a second or third mode (Z_F_RX, Z_F_TX) for the second communication phase (453), and needing to be switched from both the second and third modes (Z_F_RX, Z_F_TX) to the first mode (Z_SL) at the end of the second communication phase (453), the subscriber station (10; 30) having a transmitting module (121), a receiving module (122), a mode changeover block (15; 35), a first connection for receiving a transmission signal (TxD; TxD_T; TxD_R) from the communication control device (11; 31), and a second connection, and the method comprising the steps of
receiving, by means of the receiving module (122), a signal (VDIFF) from the bus (40) of the bus system (1),
generating, by means of the receiving module (122), a signal (S_SW) from the signal (VDIFF) received from the bus (40) and outputting the signal (S_SW) as a digital received signal (RxD) on the second connection,
evaluating, by means of the mode changeover block (15; 35), a mode changeover signal (RxD_TC) that is received on the second connection from the communication control device (11; 31) and has at least one pulse (AH_1) for signaling changeover of the mode of the transmitting/receiving device (12; 32),
switching, at the end of the first communication phase (454, 455, 451, 452), by means of the mode changeover block (15; 35), reception thresholds (T_a; T_d) of the receiving module (122) on the basis of a result of the evaluation of the mode changeover signal (RxD_TC), of the signal (S_SW) received from the bus (40) and of the transmission signal (TxD; TxD_T; TxD_R) received on the first connection in order to switch the transmitting/receiving device (12; 32) from the first mode (Z_SL) to the second mode (Z_F_RX), or
switching, at the end of the first communication phase (454, 455, 451, 452), by means of the mode changeover block (15; 35), the transmitting module (121) and reception thresholds (T_a; T_d) of the receiving module (122) on the basis of a result of the evaluation of the mode changeover signal (RxD_TC), of the signal (S_SW) received from the bus (40) and of the transmission signal (TxD; TxD_T; TxD_R) in order to switch the transmitting/receiving device (12; 32) to the third mode (Z_F_TX).

## Revendications

1. Dispositif d'émission/réception (12 ; 32) pour une station d'abonné (10 ; 30) d'un système de bus série (1), comprenant
une première borne pour recevoir un signal d'émission (TxD ; TxD_T ; TxD_R) d'un dispositif de commande de communication (11 ; 31),
un module d'émission (121) pour convertir le signal d'émission (TxD; TxD_T ; TxD_R) en signaux (CAN_H, CAN_L) pour des conducteurs de bus (41, 42) d'un bus (40) du système de bus (1) et pour émettre les signaux (CAN_H, CAN_L) sur le bus (40), système de bus (1) dans lequel au moins une première phase de communication (451, 452, 454,455) et une deuxième phase de communication (453) sont utilisées pour échanger des messages (45 ; 46) entre des stations d'abonnés (10, 20, 30) du système de bus (1), le dispositif d'émission/réception (12 ; 32) devant être commuté dans un premier mode de fonctionnement (Z_SL) pour la première phase de communication (451, 452, 454, 455), devant être commuté du premier mode de fonctionnement (Z_SL) à un deuxième ou troisième mode de fonctionnement (Z_F_RX, Z_F_TX) pour la deuxième phase de communication (453), et devant être commuté, à la fin de la deuxième phase de communication (453), aussi bien du deuxième que du troisième mode de fonctionnement (Z_F_RX, Z_F_TX) au premier mode de fonctionnement (Z_SL), un module de réception (122) pour recevoir un signal (VDIFF) du bus (40), et le module de réception (122) étant configuré pour générer un signal (S_SW) à partir du signal (VDIFF) reçu du bus (40) et pour émettre celui-ci en tantque signal de réception numérique (RxD) vers le dispositif de commande de communication (11 ; 31),
une deuxième borne pour émettre le signal de réception numérique (RxD) vers le dispositif de commande de communication (11 ; 31) et pour recevoir un signal de commutation de mode de fonctionnement (RxD_TC) du dispositif de commande de communication (11 ; 31), lequel présente au moins une impulsion (AH_1) pour signaler une commutation du mode de fonctionnement du dispositif d'émission/réception (12 ; 32), de sorte que le dispositif d'émission/réception (12 ; 32) voit sur la deuxième borne un signal de réception (RxD_T, RxD_R) qui présente, dans un bit (AL1), ladite au moins une impulsion (AH_1) s'écartant du signal d'émission (TxD_T ; TxD_R), et
un bloc de commutation de mode de fonctionnement (15 ; 35) pour évaluer le signal de commutation de mode de fonctionnement (RxD_TC) reçu du dispositif de commande de communication (11 ; 31) sur la deuxième borne, dans lequel le bloc de commutation de mode de fonctionnement (15 ; 35) est configuré pour commuter des seuils de réception (T_a ; T_d) du module de réception (122) en fonction d'un résultat de l'évaluation du signal de commutation de mode de fonctionnement (RxD_TC), du signal (S_SW) reçu du bus (40) et du signal d'émission (TxD ; TxD_T ; TxD_R), afin de commuter le dispositif d'émission/réception (12 ; 32) dans le deuxième mode de fonctionnement (Z_F_RX), et
dans lequel le bloc de commutation de mode de fonctionnement (15 ; 35) est configuré pour commuter le module d'émission (121) et les seuils de réception (T_a ; T_d) du module de réception (122) en fonction d'un résultat de l'évaluation du signal de commutation de mode de fonctionnement (RxD_TC), du signal (S_SW) reçu du bus (40) et du signal d'émission (TxD ; TxD_T ; TxD_R), afin de commuter le dispositif d'émission/réception (12 ; 32) du premier mode de fonctionnement (Z_SL) au troisième mode de fonctionnement (Z_F_TX).

2. Dispositif d'émission/réception (12 ; 32) selon la revendication 1,
dans lequel le signal de commutation de mode de fonctionnement (RxD_TC) reçu sur la deuxième borne est une impulsion (AH_1) présentant une valeur qui est l'inverse d'une valeur du signal de réception numérique (RxD ; RxD_T ; RxD_R),
dans lequel le bloc de commutation de mode de fonctionnement (15 ; 35) est configuré pour commuter les seuils de réception (T_a ; T_d) du module de réception (122) afin de commuter le dispositif d'émission/réception (12 ; 32) du premier mode de fonctionnement (Z_SL) au deuxième mode de fonctionnement (Z_F_RX), lorsque le signal de commutation (RxD_TC) présente l'impulsion (AH_1) et que la valeur du signal d'émission (TxD_R) correspond à la valeur de l'impulsion (AH_1), et
dans lequel le bloc de commutation de mode de fonctionnement (15 ; 35) est configuré pour commuter le module d'émission (121) et les seuils de réception (T_a ; T_d) du module de réception (122) afin de commuter le dispositif d'émission/réception (12 ; 32) du premier mode de fonctionnement (Z_SL) au troisième mode de fonctionnement (Z_F_TX),lorsque le signal de commutation (RxD_TC) présente l'impulsion (AH_1) et que la valeur du signal d'émission (TxD_T) est l'inverse de la valeur de l'impulsion (AH_1).

3. Dispositif d'émission/réception (12 ; 32) selon la revendication 2,
dans lequel le dispositif d'émission/réception (12 ; 32), dans le deuxième mode de fonctionnement (Z_F_RX), n'est pas l'émetteur du message (45) dans la deuxième phase de communication (453), et
dans lequel le dispositif d'émission/réception (12 ; 32), dans le troisième mode de fonctionnement (Z_F_TX), est l'émetteur du message (45) dans la deuxième phase de communication (453).

4. Dispositif d'émission/réception (12 ; 32) selon l'une quelconque des revendications précédentes, dans lequel le bloc de commutation de mode de fonctionnement (15 ; 35) est configuré pour effectuer la commutation du mode de fonctionnement, au moins lors de la commutation de la deuxième phase de communication (453) à la première phase de communication (454, 455, 451, 452), lorsqu'un front entre différents états de bus se produit dans le signal de réception (S_SW) délivré par le module de réception (122) et que le dispositif d'émission/réception (12 ; 32) n'est pas l'émetteur du message (45).

5. Dispositif d'émission/réception (12 ; 32) selon l'une quelconque des revendications précédentes, dans lequel le bloc de commutation de mode de fonctionnement (15 ; 35) est configuré pour désactiver le module d'émission (121) dans un mode de fonctionnement de la deuxième phase de communication (453) dans lequel le dispositif d'émission/réception (12 ; 32) n'est pas l'émetteur du message (45).

6. Dispositif d'émission/réception (12 ; 32) selon l'une quelconque des revendications 1 à 4, dans lequel le bloc de commutation de mode de fonctionnement (15 ; 35) est configuré pour effectuer la commutation du mode de fonctionnement, au moins lors de la commutation de la première phase de communication (454, 455, 451, 452) à la deuxième phase de communication (453), lorsque le dispositif d'émission/réception (12 ; 32) est l'émetteur du message (45) dans la deuxième phase de communication (453) et qu'un front entre différents états de bus se produit dans le signal d'émission (TxD ; TxD_T).

7. Dispositif d'émission/réception (12 ; 32) selon l'une quelconque des revendications précédentes,
dans lequel le bloc de commutation de mode de fonctionnement (15 ; 35) est configuré pour désactiver le module d'émission (121) en fonction d'un résultat de l'évaluation du signal de commutation de mode de fonctionnement (RxD_TC), du signal (S_SW) reçu du bus (40) et du signal d'émission (TxD ; TxD_T ; TxD_R), afin de commuter le dispositif d'émission/réception (12 ; 32) dans le deuxième mode de fonctionnement (Z_F_RX ; Z_F_TX), et/ou dans lequel le bloc de commutation de mode de fonctionnement (15 ; 35) est configuré pour commuter le module d'émission (121) et les seuils de réception (T_a ; T_d) du module de réception (122) en fonction d'un résultat de l'évaluation du signal de commutation de mode de fonctionnement (RxD_TC) et du signal (S_SW) reçu du bus (40), afin de commuter le dispositif d'émission/réception (12 ; 32) dans le premier mode de fonctionnement (Z_SL) à la fin de la deuxième phase de communication (453).

8. Dispositif d'émission/réception (12 ; 32) selon l'une quelconque des revendications précédentes, dans lequel le module d'émission (121) est configuré pour appliquer sur le bus (40), dans la première phase de communication (451, 452, 454, 455), des bits des signaux présentant un premier temps de bit (T_B1) qui est supérieur, d'au moins un facteur 10, à un deuxième temps de bit (T_B2) de bits que le module d'émission (121) applique sur le bus (40) dans la deuxième phase de communication (453).

9. Dispositif d'émission/réception (12 ; 32) selon la revendication 8,
dans lequel le signal de commutation de mode de fonctionnement (RxD_TC) présente, sur la deuxième borne, pour signaler qu'une commutation du mode de fonctionnement doit être effectuée, une impulsion ayant une durée d'impulsion (T_B3) qui est inférieure au premier temps de bit (T_B1) et supérieure au deuxième temps de bit (T_B2), ou
dans lequel le signal de commutation de mode de fonctionnement (RxD_TC) présente, sur la deuxième borne, au moins une impulsion ayant une durée d'impulsion (T_B3) qui est approximativement égale au deuxième temps de bit (T_B2) ou inférieure au deuxième temps de bit (T_B2).

10. Dispositif d'émission/réception (12 ; 32) selon l'une quelconque des revendications précédentes, dans lequel le signal (S_SW) reçu du bus (40) dans la première phase de communication (451, 452, 454, 455) est généré avec une couche physique différente de celle du signal (S_SW) reçu du bus (40) dans la deuxième phase de communication (453).

11. Dispositif de commande de communication (11 ; 31) pour une station d'abonné (10 ; 30) d'un système de bus série (1), comprenant
un module de commande de communication (111) pour générer un signal d'émission (TxD) afin de commander une communication de la station d'abonné (10 ; 30) avec au moins une autre station d'abonné (10 ; 20 ; 30) du système de bus (1), système de bus (1) dans lequel au moins une première phase de communication (451, 452, 454) et une deuxième phase de communication (453) sont utilisées pour échanger des messages (45 ; 46) entre des stations d'abonnés (10, 20, 30) du système de bus (1),
une première borne pour émettre le signal d'émission (TxD ; TxD_T ; TxD_R) vers un dispositif d'émission/réception (12 ; 32), lequel est configuré pour émettre le signal d'émission (TxD) sur un bus (40) du système de bus (1) de telle sorte que le dispositif d'émission/réception (12 ; 32) doit être commuté dans un premier mode de fonctionnement (Z_SL) pour la première phase de communication (451, 452, 454, 455) et doit être commuté dans un deuxième ou troisième mode de fonctionnement (Z_F_RX, Z_F_TX) pour la deuxième phase de communication (453),
une deuxième borne pour recevoir un signal de réception numérique (RxD ; RxD_T ; RxD_R) du dispositif d'émission/réception (12 ; 32),
dans lequel le dispositif de commande de communication (11 ; 31) est configuré pour générer un signal de commutation de mode de fonctionnement (RxD_TC) qui présente au moins une impulsion (AH_1) pour signaler une commutation du mode de fonctionnement du dispositif d'émission/réception (12 ; 32) et qui indique au dispositif d'émission/réception (12 ; 32) de commuter du mode de fonctionnement actuel à un autre mode de fonctionnement parmi les premier à troisième modes de fonctionnement, et qui réalise une communication interne entre le module de commande de communication (111) et le dispositif d'émission/réception (12 ; 32), et
dans lequel le module de commande de communication (111) est configuré pour émettre le signal de commutation de mode de fonctionnement (RxD_TC) vers le dispositif d'émission/réception (12 ; 32) sur la deuxième borne et pour signaler au dispositif d'émission/réception (12 ; 32), pour une commutation du dispositif d'émission/réception (12 ; 32) du premier mode de fonctionnement (Z_SL) au deuxième ou au troisième mode de fonctionnement (Z_F_RX, Z_F_TX), en même temps que le signal d'émission (TxD ; TxD_T ; TxD_R) émis sur la première borne, vers lequel des modes de fonctionnement (Z_F_RX, Z_F_TX) le dispositif d'émission/réception (12 ; 32) doit être commuté.

12. Dispositif de commande de communication (11 ; 31) selon la revendication 11,
dans lequel le signal de commutation de mode de fonctionnement (RxD_TC) présente, sur la deuxième borne, pour signaler qu'une commutation du mode de fonctionnement du dispositif d'émission/réception (12 ; 32) doit être effectuée, une impulsion ayant une durée d'impulsion (T_B3) qui est inférieure à un premier temps de bit (T_B1) avec lequel des bits des signaux sont appliqués sur le bus (40) dans la première phase de communication (451), et qui est supérieure au deuxième temps de bit (T_B2) avec lequel des bits des signaux sont appliqués sur le bus (40) dans la deuxième phase de communication (453), ou
dans lequel le signal de commutation de mode de fonctionnement (RxD_TC) présente, sur la deuxième borne, au moins une impulsion ayant une durée d'impulsion (T_B3) qui est approximativement égale au deuxième temps de bit (T_B2) ou inférieure au deuxième temps de bit (T_B2).

13. Dispositif d'émission/réception (11 ; 31) selon la revendication 11 ou 12, dans lequel il est négocié, dans la première phase de communication (451, 452, 454, 455), laquelle des stations d'abonnés (10, 20, 30) du système de bus (1) obtient, dans la deuxième phase de communication (453) consécutive, un accès au moins temporairement exclusif et sans collision au bus (40).

14. Système de bus (1), comprenant
un bus (40), et
au moins deux stations d'abonnés (10 ; 20 ; 30) qui sont reliées l'une à l'autre par le bus (40) de telle sorte qu'elles peuvent communiquer en série entre elles, et parmi lesquelles au moins une station d'abonné (10 ; 30) présente un dispositif d'émission/réception (12 ; 32) selon l'une quelconque des revendications 1 à 10 ainsi qu'un dispositif de commande de communication (11 ; 31) selon l'une quelconque des revendications 11 à 13.

15. Procédé de communication dans un système de bus série (1), le procédé étant mis en œuvre à l'aide d'un dispositif d'émission/réception pour une station d'abonné (10 ; 30) d'un système de bus (1), dans lequel au moins une première phase de communication (451, 452, 454, 455) et une deuxième phase de communication (453) sont utilisées pour échanger des messages (45 ; 46) entre des stations d'abonnés (10, 20, 30) du système de bus (1), le dispositif d'émission/réception (12 ; 32) devant être commuté dans un premier mode de fonctionnement (Z_SL) pour la première phase de communication (451, 452, 454, 455), devant être commuté du premier mode de fonctionnement (Z_SL) à un deuxième ou troisième mode de fonctionnement (Z_F_RX, Z_F_TX) pour la deuxième phase de communication (453), et devant être commuté, à la fin de la deuxième phase de communication (453), aussi bien du deuxième que du troisième mode de fonctionnement (Z_F_RX, Z_F_TX) au premier mode de fonctionnement (Z_SL), la station d'abonné (10 ; 30) comportant un module d'émission (121), un module de réception (122), un bloc de commutation de mode de fonctionnement (15 ; 35), une première borne pour recevoir un signal d'émission (TxD ; TxD_T ; TxD_R) du dispositif de commande de communication (11 ; 31), et une deuxième borne, et le procédé comprenant les étapes suivantes
recevoir, à l'aide du module de réception (122), un signal (VDIFF) du bus (40) du système de bus (1),
générer, à l'aide du module de réception (122), un signal (S_SW) à partir du signal (VDIFF) reçu du bus (40) et délivrer le signal (S_SW) en tant que signal de réception numérique (RxD) sur la deuxième borne, évaluer, à l'aide du bloc de commutation de mode de fonctionnement (15 ; 35), un signal de commutation de mode de fonctionnement (RxD_TC) reçu du dispositif de commande de communication (11 ; 31) sur la deuxième borne, lequel présente au moins une impulsion (AH_1) pour signaler une commutation du mode de fonctionnement du dispositif d'émission/réception (12 ; 32), commuter, à la fin de la première phase de communication (454, 455, 451, 452) à l'aide du bloc de commutation de mode de fonctionnement (15 ; 35), des seuils de réception (T_a ; T_d) du module de réception (122) en fonction d'un résultat de l'évaluation du signal de commutation de mode de fonctionnement (RxD_TC), du signal (S_SW) reçu du bus (40) et du signal d'émission (TxD ; TxD_T ; TxD_R) reçu sur la première borne, afin de commuter le dispositif d'émission/réception (12 ; 32) du premier mode de fonctionnement (Z_SL) au deuxième mode de fonctionnement (Z_F_RX), ou
commuter, à la fin de la première phase de communication (454, 455, 451, 452) à l'aide du bloc de commutation de mode de fonctionnement (15 ; 35), le module d'émission (121) et des seuils de réception (T_a ; T_d) du module de réception (122) en fonction d'un résultat de l'évaluation du signal de commutation de mode de fonctionnement (RxD_TC), du signal (S_SW) reçu du bus (40) et du signal d'émission (TxD ; TxD_T ; TxD_R), afin de commuter le dispositif d'émission/réception (12 ; 32) vers le troisième mode de fonctionnement (Z_F_TX).
